# EUROPEAN PATENT SPECIFICATION

(11) **EP 3 001 229 B1**
(45) Date of publication and mention of the grant of the patent: **28.06.2023**
(21) Application number: 15189567.9
(22) Date of filing: 20.05.2010
(51) Int. Cl.: G02B 6/00

(54) **FIBER OPTIC EQUIPMENT GUIDES AND RAILS CONFIGURED WITH STOPPING MEMBER(S)**
MIT STOPPELEMENTEN KONFIGURIERTE FÜHRUNGEN UND SCHIENEN FÜR EINE FASEROPTIKVORRICHTUNG
GUIDES ET RAILS D'ÉQUIPEMENT À FIBRE OPTIQUE CONFIGURÉS AVEC UN OU DES ÉLÉMENTS D'ARRÊT

(30) Priority: 21.05.2009 US 180331 P; 22.06.2009 US 219233 P; 09.10.2009 US 576806
(43) Date of publication of application: 30.03.2016
(62) Divisional of application: 10778368.0
(73) Proprietor: Corning Optical Communications LLC, Charlotte, NC 28216 (US)
(72) Inventor: Makrides-Saravanos, Elli, Highland Village, TX Texas 75077 (US); Strause, Kevin Lee, Keller, TX Texas 76248 (US); Works, Antwan J., Lewisville, TX Texas 75077 (US)
(74) Representative: Reeve, Nicholas Edward

(56) References cited:
- WO-A2-2008/089190
- US-A1- 2008 085 092

## Description

### RELATED APPLICATIONS

This application is a continuation of International Application No. PCT/US10/35529 filed May 20, 2010, which claims the benefit of priority to U.S. Application No. 61/180,331, filed May 21, 2009.

The present application also claims priority to co-pending U.S. Provisional Patent Application Serial No. 61/219,233, filed June 22, 2009, entitled "Fiber Optic Equipment Guides and Rails Configured With Stopping Position(s), and Related Equipment,".

The present application is related to co-pending U.S. Provisional Patent Application Serial No. 61/180,334, filed May 21, 2009, entitled "Fiber Optic Equipment Supporting Moveable Fiber Optic Equipment Tray(s) and Module(s), and Related Equipment,".

The present application is also related to co-pending U.S. Provisional Patent Application Serial No. 61/219,241, filed June 22, 2009, entitled "Fiber Optic Equipment Supporting Moveable Fiber Optic Equipment Tray(s) and Module(s), and Related Equipment,".

The present application is related to co-pending U.S. Patent Application Serial No. 12/323,423, filed November 25, 2008, entitled "Rear-Installable Fiber Optic Modules and Equipment,".

The present application is also related to co-pending U.S. Patent Application Serial No. 12/323,415, filed November 25, 2008, entitled "Independently Translatable Modules and Fiber Optic Equipment Trays In Fiber Optic Equipment,".

The present application is also related to co-pending U.S. Patent Application Serial No. 12/394,483, filed February 27, 2009, entitled "Rear-Slidable Extension in a Fiber Optic Equipment Tray,".

### BACKGROUND

### Field of the Disclosure

The technology of the disclosure relates to fiber optic modules provided in fiber optic equipment to support fiber optic connections.

### Technical Background

Benefits of optical fiber include extremely wide bandwidth and low noise operation. Because of these advantages, optical fiber is increasingly being used for a variety of applications, including but not limited to broadband voice, video, and data transmission. Fiber optic networks employing optical fiber are being developed and used to deliver voice, video, and data transmissions to subscribers over both private and public networks. These fiber optic networks often include separated connection points linking optical fibers to provide "live fiber" from one connection point to another connection point. In this regard, fiber optic equipment is located in data distribution centers or central offices to support interconnections.

The fiber optic equipment is customized based on the application need. The fiber optic equipment is typically included in housings that are mounted in equipment racks to optimize use of space. One example of such fiber optic equipment is a fiber optic module. A fiber optic module is designed to provide cable-to-cable fiber optic connections and manage the polarity of fiber optic cable connections. A fiber optic module is typically mounted to a chassis or housing which is then mounted inside an equipment rack or cabinet. A technician establishes fiber optic connections to fiber optic equipment mounted in the equipment rack. A need still exists to improve access to optical components in a fiber optic equipment tray as well as provide neat routing and organization of jumper connections.

US 2008/0085092 A1 is directed to a generic sliding drawer system, similar to that found in any sliding cabinet or drawer. WO 2008/089190 A2 describes an adapter panel arrangement including a chassis and a panel of adapters. The adapters define open rearward cable connections and open forward cable connections of the panel arrangement. The adapters are arranged in arrays that slide independently of other adapter arrays to provide access to the open rearward and open forward cable connections.

### SUMMARY OF THE DETAILED DESCRIPTION

Embodiments disclosed in the detailed description include fiber optic equipment guides and/or fiber optic equipment rails and related equipment and methods. The fiber optic equipment guides and/or fiber optic equipment rails have at least one stopping member disposed therein to provide at least one stopping position during movement. The fiber optic equipment guides and/or fiber optic equipment rails can be included in fiber optic equipment to support movement or translation of the fiber optic equipment for access. Such fiber optic equipment can include, but is not limited to, fiber optic equipment chassis, drawers, equipment trays, and fiber optic modules. The fiber optic equipment guides and/or rails include at least one stopping member configured to provide at least one stopping position during movement of the fiber optic guides and/or rails. Stopping positions allow fiber optic equipment to be retained in a given position during access to the fiber optic equipment. The stopping positions are configured to be overcome with additional force to allow further movement of the fiber optic equipment.

The invention provides a fiber optic equipment assembly according to claim 1.

Additional features and advantages will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

**FIG. 1** is a front perspective view of an exemplary fiber optic equipment drawer installed in a chassis and supporting independently moveable fiber optic equipment trays and modules, according to one embodiment;
**FIG. 2A** is a front perspective view of the fiber optic equipment drawer of **FIG. 1** pulled fully open from the chassis and tilted downward, with one of the fiber optic equipment trays pulled out from the fiber optic equipment drawer;
**FIG. 2B** is a side view of the fiber optic equipment drawer in **FIG. 2A****;**
**FIG. 3** is a front perspective view of the fiber optic equipment drawer and chassis of **FIG. 1** with a chassis cover removed;
**FIG. 4** is a close-up view of the drawer door of the fiber optic equipment drawer of **FIG. 3****;**
**FIG. 5** is a front perspective view of the fiber optic equipment drawer and chassis of **FIG. 1** with the drawer door lowered according to one embodiment;
**FIG. 6** is a front perspective view of the fiber optic equipment drawer and chassis of **FIG. 1** with the fiber optic equipment drawer extended out from the chassis and the drawer door lowered;
**FIG. 7** is a front perspective view of the fiber optic equipment drawer of **FIG. 1** without installed fiber optic equipment trays and modules;
**FIG. 8A** is a left side, cross-section view of an exemplary drawer retention member in the fiber optic equipment drawer of **FIG. 1** retained in the chassis;
**FIG. 8B** is a top perspective, cross-section view of the drawer retention member illustrated in **FIG. 8A****;**
**FIG. 9A** is a top perspective, close-up view of the drawer retention member of the fiber optic equipment drawer of **FIG. 1** pulled out from the chassis;
**FIG. 9B** is a bottom perspective, close-up view of the drawer retention member illustrated in **FIG. 9A****;**
**FIG. 10A** is a front perspective view of a rear panel of the fiber optic equipment drawer of **FIG. 1** illustrating an exemplary drawer pull-out limiting member just prior to the fiber optic equipment drawer being fully pulled out from the chassis;
**FIG. 10B** is a front perspective view of a rear panel of the fiber optic equipment drawer of **FIG. 1** illustrating the fiber optic equipment drawer pull-out limiting member of **FIG. 10A** when the fiber optic equipment drawer is fully pulled out from the chassis;
**FIG. 11A** is a front perspective view of the fiber optic equipment drawer of **FIG. 1** fully pulled out from the chassis and tilted downward;
**FIG. 11B** is a side view of the fiber optic equipment drawer in **FIG. 11A****;**
**FIG. 12** is a front perspective view of the fiber optic equipment drawer of FIG. 1 without installed fiber optic equipment trays and modules and tilted downward;
**FIG. 13A** is a top perspective close-up view of an exemplary tilt limiting member of the fiber optic equipment drawer of **FIG. 1** when the fiber optic equipment drawer is pulled out from the chassis and not tilted;
**FIG. 13B** is a top perspective close-up view of the tilt limiting member of **FIG. 13A** when the fiber optic equipment drawer is fully pulled out from the chassis and tilted downward;
**FIG. 13C** is a bottom perspective close-up view of **FIG. 13B****;**
**FIG. 13D** is a close-up bottom perspective view of the tilt limiting member of **FIG. 13A** including a slot to further limit the tilt angle of the fiber optic equipment drawer;
**FIG. 13E** is a bottom perspective view of **FIG. 13D** with the fiber optic equipment drawer tilted downward;
**FIG. 13F** is a front, right perspective view of the fiber optic equipment drawer of **FIG. 7** including the tilt limiting members of **FIGS. 13D and 13E** disposed between a flange of the fiber optic equipment drawer and a control plate configured to provide splay control for the fiber optic equipment drawer;
**FIG. 13G** is a rear, right perspective view of **FIG. 13F****;**
**FIGS. 13H and 13I** are close-up, left and right perspective views, respectively, of the fiber optic equipment drawer and the tilt limiting member in **FIGS. 13F** **and** **13G** illustrating an example of how a control plate can be attached to the flanges of the fiber optic equipment drawer;
**FIG. 13J** is a close-up side view of the fiber optic equipment drawer and the tilt limiting member in **FIGS. 13F** **and** **13G** illustrating an exemplary alignment of the control plate to the tilt limiting member and a flange of the fiber optic equipment drawer;
**FIG. 13K** is a close-up, right perspective view of the control plate attached to the flange of the fiber optic equipment drawer of **FIGS. 13E** **and** **13F****;**
**FIG. 13L** is a close-up, left perspective view of the control plate attached to the fiber optic equipment drawer of **FIGS. 13E** **and** **13F** with the fiber optic equipment drawer tilted downward;
**FIG. 14A** is a front perspective view of an exemplary fiber optic equipment tray supported by the fiber optic equipment drawer of **FIG. 1** and pulled out from the fiber optic equipment drawer;
**FIG. 14B** is a close-up view of the fiber optic equipment tray of **FIG. 14A****;**
**FIG. 15** is a front perspective view of the exemplary fiber optic equipment tray of **FIG. 14A** removed from the fiber optic equipment drawer of **FIG. 1****;**
**FIG. 16A** is a front, right perspective view of an exemplary fiber optic module that can be supported by the fiber optic equipment tray of **FIG. 15****;**
**FIG. 16B** is a front, left perspective view of the fiber optic module of **FIG.** 16A;
**FIG. 17** is a front perspective view of fiber optic modules according to the fiber optic modules of **FIG. 16A** installed in the fiber optic equipment tray of **FIG. 15****;**
**FIG. 18** is a rear perspective view of the fiber optic equipment drawer and chassis of **FIG. 3** illustrating rear-installable fiber optic modules installed in the fiber optic equipment trays installed in the fiber optic equipment drawer;
**FIGS. 19A** **and** **19B** are left and right perspective views of an exemplary tray guide disposed in the fiber optic equipment drawer of **FIG. 1** configured to receive the fiber optic equipment tray of **FIG. 15****;**
**FIGS. 19C** **and** **19D** are left and right perspective views of another exemplary tray guide configured to receive tray rail(s) of the fiber optic equipment tray of **FIG. 15****;**
**FIG. 20** is a perspective, left-side cross-sectional view of the fiber optic equipment drawer and chassis of **FIG. 1** illustrating the tray guide of **FIGS. 19A** **and** 19B receiving tray rails of the fiber optic equipment trays of **FIG. 15****;**
**FIGS. 21A and 21B** are perspective and top views, respectively, of an exemplary tray rail for the fiber optic equipment tray of **FIG. 15** configured to be received by the tray guide of **FIGS. 19A** **and** **19B****;**
**FIG. 22** is a rear perspective view of the fiber optic equipment drawer and chassis of **FIG. 1** with the rear chassis cover illustrated and removed;
**FIG. 23** is a rear perspective view of the fiber optic equipment drawer and chassis of **FIG. 22** with the rear chassis cover installed;
**FIG. 24** is a front perspective view of another exemplary fiber optic equipment drawer installed in a chassis and supporting independently moveable fiber optic equipment trays and modules;
**FIG. 25A** is a front perspective view of the fiber optic equipment drawer of **FIG. 24** pulled fully open from the chassis and tilted downward;
**FIG. 25B** is a side view of the fiber optic equipment drawer in **FIG. 25A****;**
**FIG. 26** is a front perspective view of the fiber optic equipment drawer and chassis of **FIG. 24** with the drawer door lowered according to one embodiment;
**FIG. 27A** is a front perspective view of the fiber optic equipment drawer and chassis of **FIG. 24** with the fiber optic equipment drawer extended out from the chassis and the drawer door lowered;
**FIG. 27B** is a top view of the fiber optic equipment drawer and chassis of **FIG. 27A****;**
**FIG. 28** is a bottom perspective, close-up view of a left end drawer retention member of the fiber optic equipment drawer of **FIG. 24****;**
**FIG. 29A** is a perspective, right-side, isolated view of a right end drawer retention member of the fiber optic equipment drawer of **FIG. 24****;**
**FIG. 29B** is a perspective, left-side, isolated view of the drawer retention member of **FIG. 29A****;**
**FIG. 30A** is a perspective, close-up view of the front panel and rear panel of the fiber optic equipment drawer of **FIG. 24** with the front panel tilted downward;
**FIG. 30B** is a perspective, close-up view of a drawer pull-out limiting member of the fiber optic equipment drawer of **FIG. 24****;**
**FIG. 31A** is a front perspective view of the fiber optic equipment drawer of **FIG. 24** fully pulled out from the chassis and tilted downward;
**FIG. 31B** is a rear perspective view of the fiber optic equipment drawer in **FIG. 31A****;**
**FIG. 32A** is a perspective, close-up view of a drawer guide fully extended out from a drawer rail disposed in the fiber optic equipment drawer of **FIG. 24****;**
**FIG. 32B** is a perspective, close-up view of the drawer guide of **FIG. 32A** retracted fully into the drawer rail in the fiber optic equipment drawer of **FIG. 24****;**
**FIG. 33A** is a front perspective view of alternative exemplary fiber optic equipment including independently moveable fiber optic equipment trays and fiber optic modules installed therein, according to another embodiment;
**FIG. 33B** is a side view of the fiber optic equipment drawer of **FIG. 33A**;
**FIG. 34** is a front perspective view of the fiber optic equipment of **FIG. 33A** with the chassis cover removed; and
**FIG. 35** is a front perspective view of the fiber optic equipment of **FIG. 33A** with a fiber optic equipment tray pulled out from the chassis.

### DETAILED DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

Embodiments disclosed in the detailed description include fiber optic equipment guides and/or fiber optic equipment rails and related equipment and methods. The fiber optic equipment guides and/or fiber optic equipment rails have at least one stopping member disposed therein to provide at least one stopping position during movement. The fiber optic equipment guides and/or fiber optic equipment rails can be included in fiber optic equipment to support movement or translation of the fiber optic equipment for access. Such fiber optic equipment can include, but is not limited to, fiber optic equipment chassis, drawers, equipment trays, and fiber optic modules. The fiber optic equipment guides and/or rails include at least one stopping member configured to provide at least one stopping position during movement of the fiber optic guides and/or rails. Stopping positions allow fiber optic equipment to be retained in a given position during access to the fiber optic equipment. The stopping positions are configured to be overcome with additional force to allow further movement of the fiber optic equipment.

Embodiments disclosed in the detailed description also include fiber optic apparatuses that support fiber optic equipment. In one embodiment, the fiber optic apparatus comprises a fiber optic equipment drawer. The fiber optic equipment drawer is installed in and movable about a chassis. At least one fiber optic equipment tray is received in at least one tray guide disposed in the fiber optic equipment drawer. The fiber optic equipment tray(s) is moveable about the tray guide(s) to be movable about the fiber optic equipment drawer. At least one fiber optic module is received in at least one module guide disposed in a fiber optic equipment tray. The fiber optic module(s) is movable about the module guide(s) to be movable about a fiber optic equipment tray. In this manner, enhanced access can be provided to the fiber optic module(s) disposed in the fiber optic equipment drawer and its fiber optic connections. The fiber optic equipment drawer can be moved out from the chassis to provide access to the fiber optic equipment tray(s) and fiber optic module(s) supported therein. The fiber optic equipment tray(s) can be moved out from the fiber optic equipment drawer to provide enhanced access to the fiber optic module(s) supported therein. The fiber optic module(s) can be moved out from the fiber optic equipment tray(s) to provide further enhanced access to the fiber optic module(s). Enhanced access may be useful for installing or re-installing, re-configuring, and/or removing fiber optic modules and accessing fiber optic connections made therein.

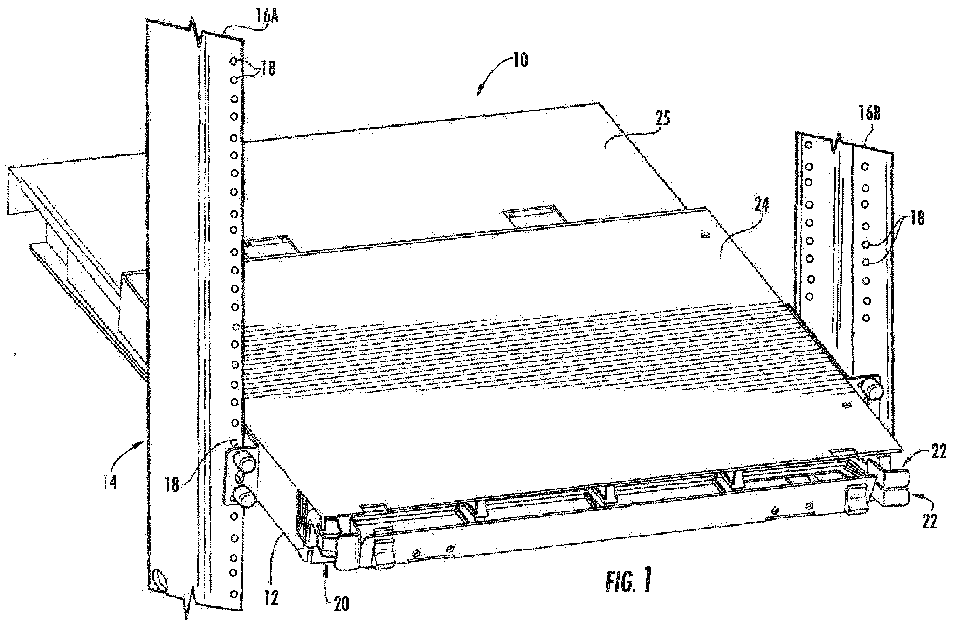

In this regard, **FIG. 1** illustrates exemplary fiber optic equipment **10.** The exemplary fiber optic equipment **10** may be provided at a data distribution center or central office to support cable-to-cable fiber optic connections and to manage a plurality of fiber optic cable connections. The fiber optic equipment **10** includes a fiber optic equipment chassis **12** ("chassis **12**"). The chassis **12** is shown as being installed in a fiber optic equipment rack **14.** The fiber optic equipment rack **14** contains two vertical rails **16A, 16B** that extend vertically and include a series of apertures **18.** The apertures **18** facilitate attachment of the fiber optic equipment **10** inside the fiber optic equipment rack **14.** The fiber optic equipment **10** is attached and supported by the fiber optic equipment rack **14** in the form of shelves that are stacked on top of each other within the vertical rails **16A, 16B.** As illustrated, the fiber optic equipment **10** is attached to the vertical rails **16A, 16B.** The fiber optic equipment rack **14** may support 1U-sized shelves, any other U-size, with "U" equaling a standard 1.75 inches in height, or any other height desired.

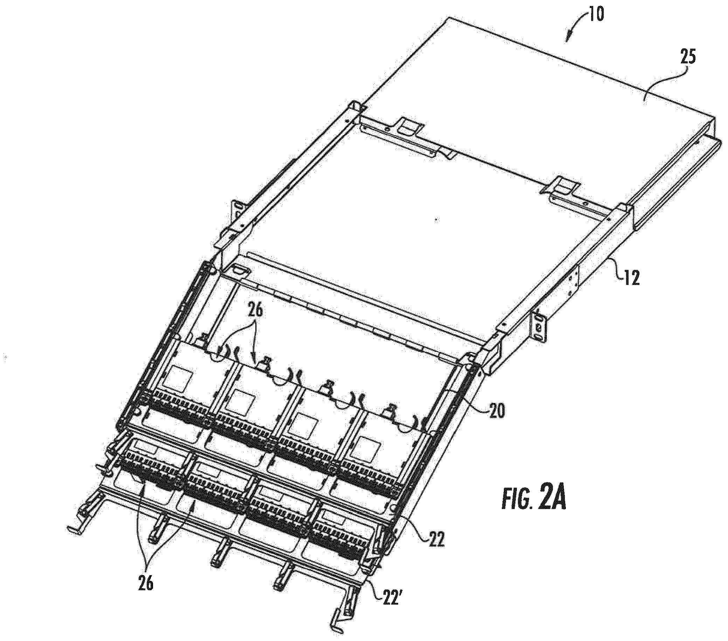

As illustrated in **FIG. 1** and discussed in greater detail below in this description, the chassis **12** includes a fiber optic equipment drawer **20** supporting one or more extendable fiber optic equipment trays **22.** The fiber optic equipment trays **22** can be moved and extended from the fiber optic equipment drawer **20** and retracted back into the fiber optic equipment drawer **20.** Any number of fiber optic equipment trays **22** can be provided. Each fiber optic equipment tray **22** supports one or more fiber optic modules (illustrated in **FIG. 2A** as element **26)** that each support one or more fiber optic connections. The view of the fiber optic modules in **FIG. 1** is obstructed by a front chassis cover **24** placed in front of the fiber optic equipment drawer **20** as part of the chassis **12.** The front chassis cover **24** is attached to a rear chassis cover **25** to form a cover over the chassis **12.** The fiber optic equipment drawer **20** is extendable out from the chassis **12** to access the fiber optic equipment trays **22** and the fiber optic modules **26** supported therein.

In the example of the fiber optic equipment **10** in **FIG. 1****,** two fiber optic equipment trays **22** are supported by the fiber optic equipment drawer **20** with each fiber optic equipment tray **22** supporting four (4) fiber optic modules **26.** Each fiber optic module **26** supports twelve (12) optical fiber connections. Thus, a total of up to ninety-six (96) optical fiber connections can be provided by the fiber optic equipment drawer **20,** although the fiber optic equipment drawer **20** is not limited to this density.

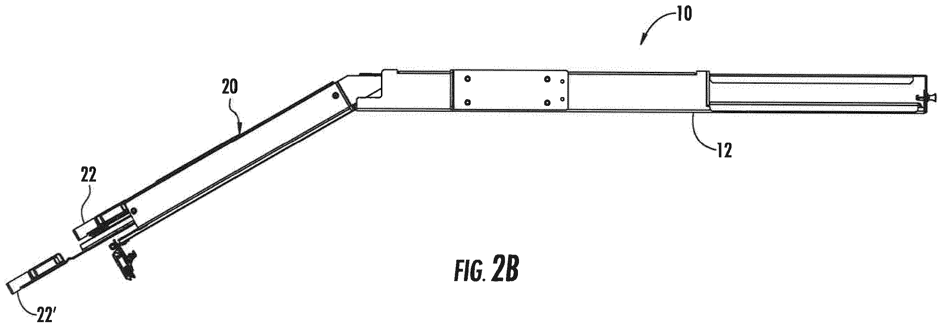

**FIGS. 2A** **and** **2B** are provided to summarize certain capabilities and features of the fiber optic equipment **10** and fiber optic equipment drawer **20** of **FIG. 1****.** Embodiments of these capabilities and features will be described in more detail in this description. **FIG. 2A** is a front perspective view of the chassis **12** and fiber optic equipment drawer **20.** **FIG. 2B** is a side view of the chassis **12** and fiber optic equipment drawer **20.** As illustrated in **FIG. 2A****,** the fiber optic equipment drawer **20** is pulled out from the chassis **12.** The fiber optic modules **26** supported by the fiber optic equipment trays **22** inside the fiber optic equipment drawer **20** can be seen. The fiber optic equipment drawer **20** can be extended out from the chassis **12** to provide access to the fiber optic equipment trays **22.** The fiber optic equipment trays **22** can be extended out from the fiber optic equipment drawer **20** to provide access to fiber optic modules **26** supported in the fiber optic equipment trays **22** and fiber optic connections supported therein. As illustrated in **FIGS. 2A** **and** **2B****,** the fiber optic equipment drawer **20** is pulled or extended fully from the chassis **12** and tilted downward. The fiber optic equipment drawer **20** can be tilted downward to tilt the fiber optic modules **26** installed in the fiber optic equipment drawer **20** downward if desired, as illustrated in **FIGS. 2A** **and** **2B****.** Tilting the fiber optic equipment drawer **20** downward for access may be particularly useful if the fiber optic equipment drawer **20** is located higher in a fiber optic equipment rack. The fiber optic modules **26** can be accessed by pulling out the fiber optic equipment tray **22** supporting the fiber optic module **26** from the fiber optic equipment drawer **20,** as illustrated in **FIGS. 2A** **and** **2B****.** Further, the fiber optic modules **26** can be removed from the fiber optic equipment trays **22,** if desired.

As will be described in more detail below, each fiber optic equipment tray **22** is also independently translatable from the fiber optic equipment drawer **20,** whether or not the fiber optic equipment drawer **20** is extended out from the chassis **12** or tilted downward. This is illustrated by example in **FIGS. 2A** **and** **2B****.** As illustrated therein, one of the fiber optic equipment trays **22'** is pulled out from the extended fiber optic equipment drawer **20.** In this manner, enhanced access can be provided to the fiber optic modules **26.** Access may be used for installing, configuring, re-configuring, re-installing, and removing the fiber optic modules **26** and the fiber optic connections provided therein as an example. As will be also described in more detail below, each particular fiber optic module **26** in this embodiment can be translated or removed independent from other fiber optic modules **26** in a given fiber optic equipment tray **22** for further access, if desired.

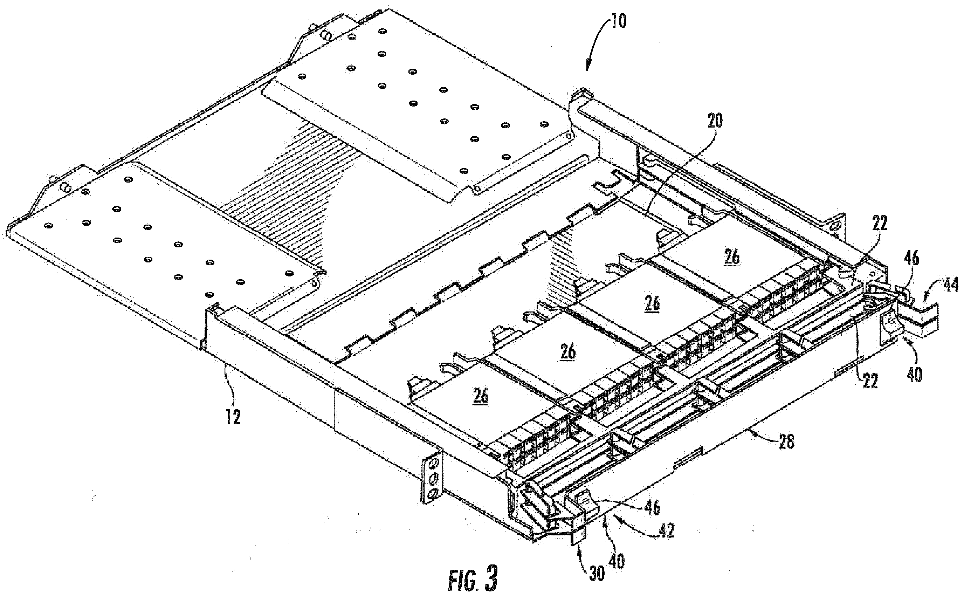

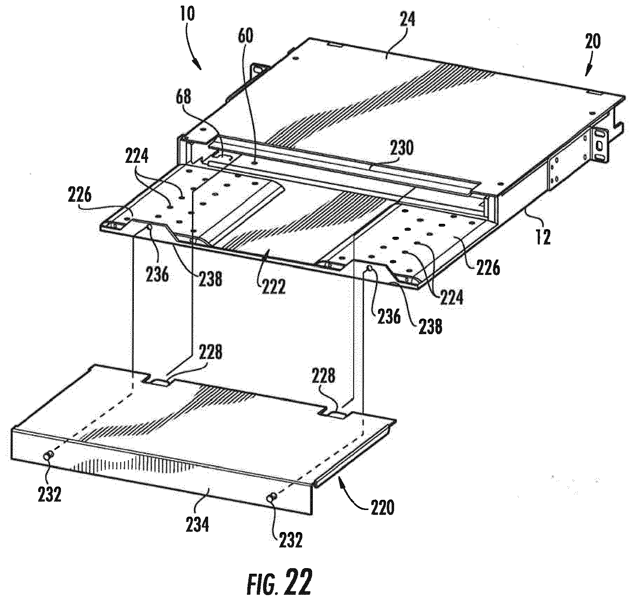

**FIGS. 3-23** will now be referenced to describe the various capabilities and features of the fiber optic equipment **10** and fiber optic equipment drawer **20** of **FIG. 1** by example in more detail.

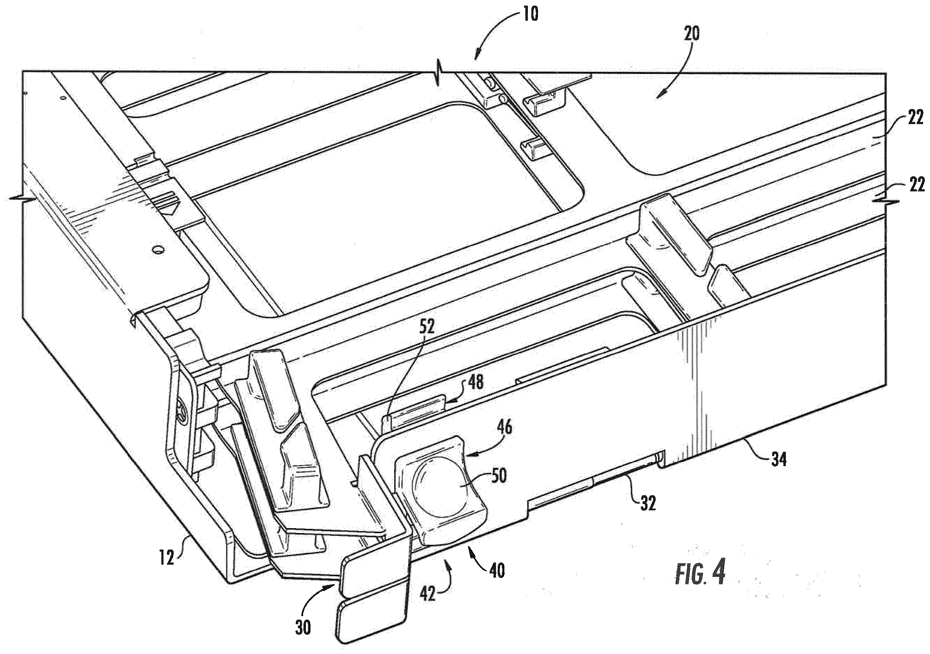

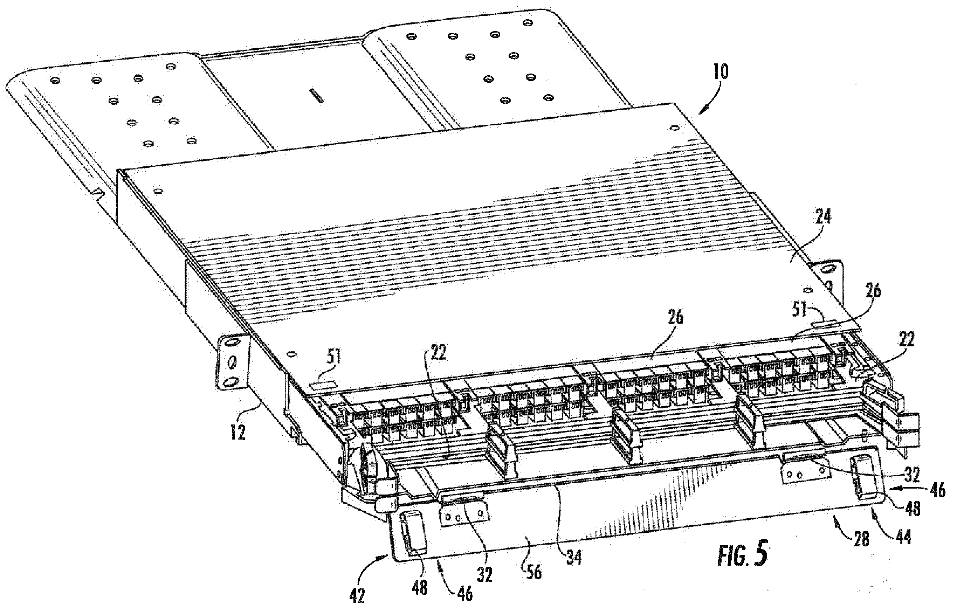

**FIG. 3** is a front perspective view of the fiber optic equipment **10** and fiber optic equipment drawer **20** of **FIG. 1** with the fiber optic equipment drawer **20** fully retracted into the chassis **12.** The front chassis cover **24** and the rear chassis cover **25** are removed to facilitate discussion of the components of and inside the fiber optic equipment drawer **20.** As illustrated in **FIG. 3****,** the fiber optic equipment drawer **20** includes a drawer door **28** in this embodiment. When the fiber optic equipment trays **22** are fully retracted into the fiber optic equipment drawer **20,** as illustrated in **FIG. 3****,** the drawer door **28** can be closed and locked to the chassis **12** to close off access to the fiber optic equipment trays **22.** In this embodiment, the drawer door **28** is hingedly attached to the front end **30** of the fiber optic equipment drawer **20.** **FIG. 4** is a close-up view of **FIG. 3** illustrating a portion of the drawer door **28** and a hinge **32** attaching a bottom portion **34** of the drawer door **28** to the front end **30** of the fiber optic equipment drawer **20** in this embodiment. In this manner, the drawer door **28** is retained with the fiber optic equipment drawer **20** when the drawer door **28** is opened, as illustrated in **FIG. 5****.**

To retain the drawer door **28** closed to the chassis **12** in this embodiment, a drawer door locking mechanism **40** is provided. The drawer door locking mechanism **40** is configured to releasably retain the drawer door **28** closed to the chassis **12,** and more particularly to the front chassis cover **24.** As illustrated in **FIG. 3****,** two drawer door locking mechanisms **40** are provided; one for a left side end **42** and one for a right side end **44** of the drawer door **28.** **FIG. 4** illustrates a close-up view of the drawer door locking mechanism **40.** In this embodiment, the drawer door locking mechanism **40** is comprised of a push button latch **46.** The push button latch **46** is configured to engage a latch **48** with a latch orifice **51** disposed in the front chassis cover **24** to retain the drawer door **28** closed. Push button latches **46** are each disposed in the drawer door **28,** one on the left side end **42** and one on the right side end **44,** in this embodiment as illustrated in **FIG. 5****.** Two latch orifices **51** are disposed in the front chassis cover **24** and configured to receive the latches **48** to lock the drawer door **28,** as also illustrated in **FIG. 5****.** The push button latches **46** in this embodiment are spring-loaded such that when a force is not applied to push buttons **50,** the latches **48** are biased upward to retain the latches **48** engaged with the latch orifices **51** when the drawer door **28** is closed.

When it is desired to pull out one or more of the fiber optic equipment trays **22,** the drawer door **28** can be unlocked from the front chassis cover **24** and opened. The push buttons **50** are configured to move the latches **48** downward to overcome the spring-loaded force in the push button latches **46** when a downward force is applied to the push buttons **50.** When the push buttons **50** are pushed downward, the latches **48** are disengaged from the latch orifices **51** in the front chassis cover **24** to unlock the drawer door **28.** The drawer door **28** can then be opened from the front chassis cover **24.** When opened, the drawer door **28** can swing downward about the hinges **32.**

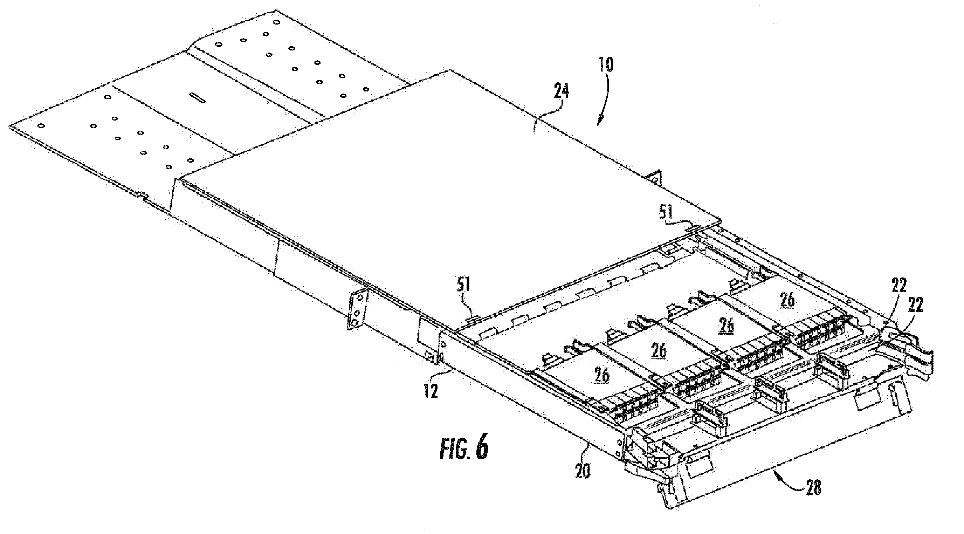

As previously discussed, the fiber optic equipment drawer **20** in the fiber optic equipment **10** of **FIG. 1** is configured to be pulled out from the chassis **12** for enhanced access to the fiber optic equipments trays **22** and/or to the fiber optic modules **26** contained therein. In this regard, **FIG. 6** provides a front perspective view of the fiber optic equipment **10** and fiber optic equipment drawer **20** of **FIG. 1** with the drawer door **28** opened and lowered and the fiber optic equipment drawer **20** extended out from the chassis **12.**

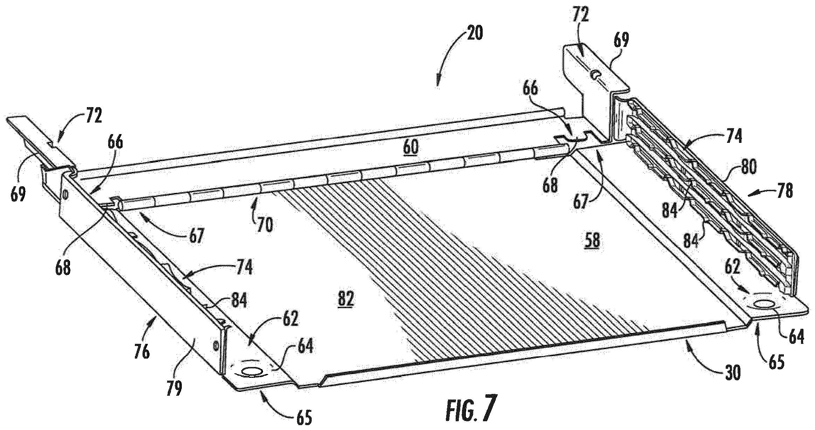

To further illustrate the fiber optic equipment drawer **20** and its various features and components, a perspective view of the fiber optic equipment drawer **20** which has been removed from the chassis **12** and does not include fiber optic equipment trays **22** and fiber optic modules **26** is illustrated in **FIG. 7****.** The fiber optic equipment drawer **20** is configured to provide several features, some or all which can be provided. In this embodiment, the fiber optic equipment drawer **20** includes a front panel **58** attached to a rear panel **60.** The front panel **58** and rear panel **60** may be formed from sheet metal or any other form or type of material desired. The front panel **58** is configured to support one or more fiber optic equipment trays **22** and fiber optic modules 26 disposed in the fiber optic equipment trays **22,** as previously discussed and illustrated in **FIG. 6****.**

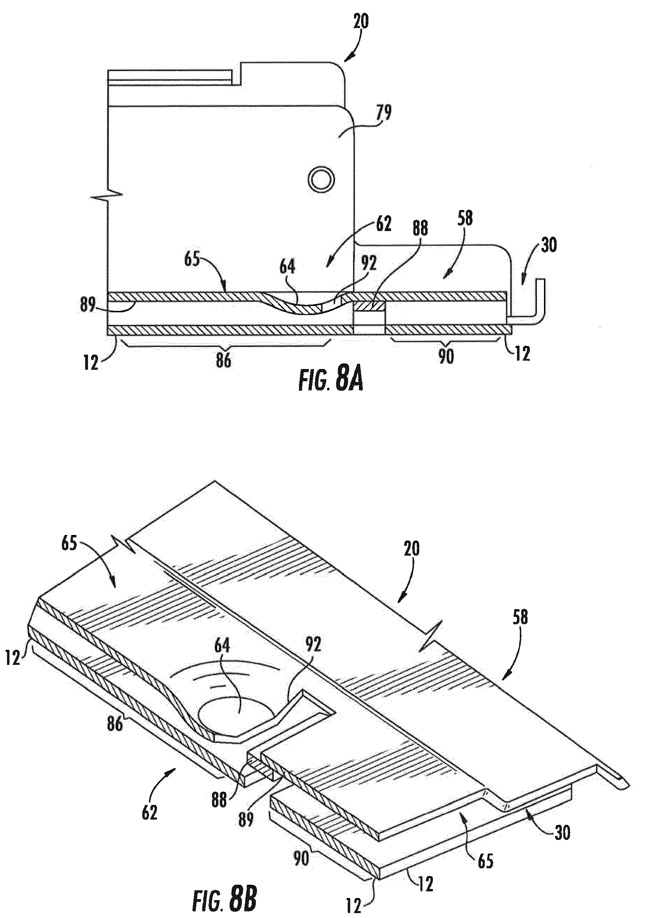

With continuing reference to **FIG. 7**, the fiber optic equipment drawer **20** includes two drawer retention members **62** disposed in the front panel **58.** The drawer retention members **62** are configured to releasably retain the fiber optic equipment drawer **20** in the chassis **12** until a sufficient and purposeful force is applied to release the fiber optic equipment drawer **20.** In this embodiment, the drawer retention members **62** are provided in the form of embosses or dimples **64** disposed in the front panel **58** adjacent the front end **30** of the fiber optic equipment drawer **20.** The embosses **64** are configured to align with and interfere with protrusions provided in the form of protruding lances (illustrated in **FIG. 8A** as element **88**) disposed in the chassis **12** when the fiber optic equipment drawer **20** is retracted into the chassis **12.** To release the fiber optic equipment drawer **20** to be extended from the chassis **12,** a force is applied to the fiber optic equipment drawer **20.** The embosses **64** will abut against the lances **88.** To clear the interference between the embosses **64** and the lances **88,** a force is applied to the fiber optic equipment drawer **20** sufficient to allow the embosses **64** to be pulled up across and over the lances **88** in the chassis **12** to release the fiber optic equipment drawer **20** from the chassis **12.** A force is likewise applied to the fiber optic equipment drawer **20** to push the embosses **64** across and back over the lances **88** to retain the fiber optic equipment drawer **20** retracted into the chassis **12.** The embosses **64** in this embodiment are disposed in raised sections **65** in the front panel **58** extending from the front end **30** to a rear end **67** of the front panel **58.** One or more than two drawer retention members **62** may also be provided. More detail regarding the drawer retention members **62** in this embodiment is described below with regard to **FIGS. 8A-9B****.**

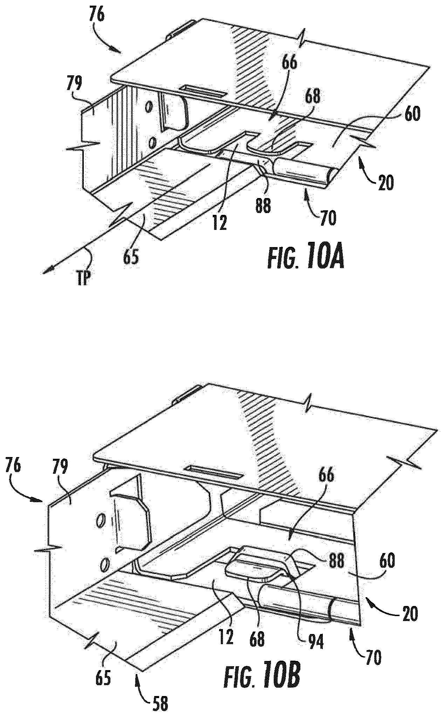

Also in this embodiment as illustrated in **FIG. 7****,** two drawer pull-out limiting members **66** are disposed in the rear panel **60** of the fiber optic equipment drawer **20.** The drawer pull-out limiting members **66** limit the pull out distance of the fiber optic equipment drawer **20** from the chassis **12.** Flanges **69** are provided as part of the rear panel **60** to ride along the inside of the chassis **12** as the fiber optic equipment drawer **20** is pulled out from the chassis **12.** The drawer pull-out limiting members **66** each include tabs **68** that are configured to also engage with lances **88** disposed in the chassis **12.** Once the tabs **68** engage with the lances **88,** the fiber optic equipment drawer **20** is prevented from further extending out from the chassis **12.** One or more than two drawer pull-out limiting members **66** may also be provided. More detail regarding the drawer pull-out limiting members **66** in this embodiment is described below with regard to **FIGS. 10A-10B****.**

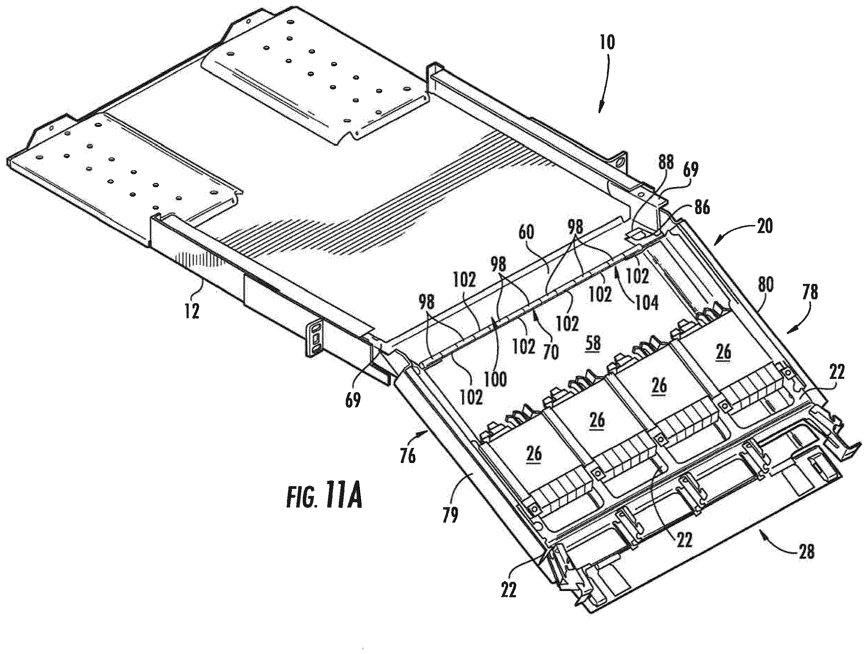

With continuing reference to **FIG. 7****,** the front panel **58** and rear panel **60** in this embodiment allow the fiber optic equipment drawer **20** to be tilted downward when pulled out from the chassis **12.** The front panel **58** is configured to tilt about the rear panel **60** and the chassis **12** via a hinge **70** formed and disposed between the front panel **58** and the rear panel **60.** Any fiber optic equipment, including fiber optic equipment trays **22** and fiber optic modules **26** disposed in the front panel **58,** will also tilt downward as a result of the front panel **58** being tilted downward. The flanges **69** provided as part of the rear panel **60** each contain a tilt limiting member **72** to limit the downward tilting of the fiber optic equipment drawer **20** about the rear panel **60** and the chassis **12.** One or more than two tilt drawer limiting members **72** may also be provided. More detail regarding the tilting ability of the fiber optic equipment drawer **20** and the drawer tilt limiting members **72** to limit the tilt angle of the fiber optic equipment drawer **20** is described below with regard to **FIGS. 11A-14****.**

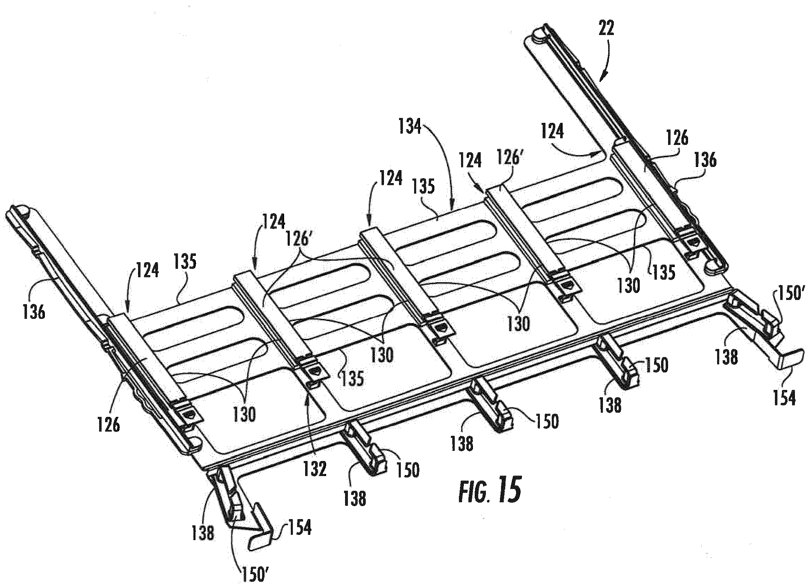

With continuing reference to **FIG. 7****,** the fiber optic equipment drawer **20** in this embodiment also includes two tray guides **74** each disposed on a left side end **76** and a right side end **78** of the fiber optic equipment drawer **20.** The tray guides **74** are disposed on left and right side members **79, 80** disposed generally orthogonally to a base **82** of the front panel **58.** The tray guides **74** are configured to receive one or more fiber optic equipment trays **22** each supporting one or more fiber optic modules **22,** as previously discussed and illustrated in **FIG. 6****.** The tray guides **74** in this embodiment are comprised of a plurality of tray rail guides **84** each configured to receive a tray rail of a fiber optic equipment tray **22.** In this manner, the fiber optic equipment trays **22** can be moved in and out of the fiber optic equipment drawer **20** by moving the tray rails about the tray rail guides **84.** More detail regarding the tray guides **74** included in the fiber optic equipment drawer **20** to support fiber optic equipment trays **22** is described below with regard to **FIGS. 15-20****.**

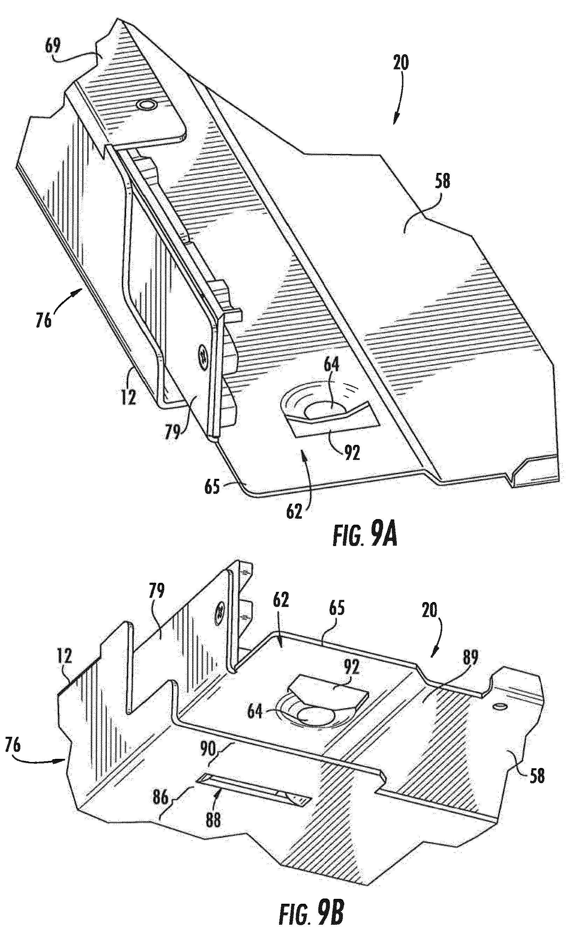

**FIGS. 8A-9B** illustrate more detail regarding the drawer retention members **62** disposed in the fiber optic equipment drawer **20.** The drawer retention members **62** retain the fiber optic equipment drawer **20** in the chassis **12** when retracted in the chassis **12.** **FIGS. 8A and 8B** illustrate side and perspective cross-section views, respectively, of one drawer retention member **62** and the surrounding front panel **58** of the fiber optic equipment drawer **20** and chassis **12** when the fiber optic equipment drawer **20** is retracted and retained in the chassis **12.** As illustrated, the emboss **64** is disposed on the raised section **65** of the front panel **58** on the left side end **76** of the fiber optic equipment drawer **20.** Note that another emboss **64** not illustrated in **FIGS. 8A and 8B** is also disposed on the right side end **78** of the fiber optic equipment drawer **20,** as illustrated in **FIG. 6****.** In **FIGS. 8A and 8B****,** the emboss **64** is located on a rearward side **86** of a lance **88** retaining the fiber optic equipment drawer **20** in the chassis **12.** The lance **88** is disposed in the chassis **12** to protrude above the chassis **12** adjacent to a bottom side **89** of the front panel **58.** When it is desired to pull the fiber optic equipment drawer **20** out from the chassis **12,** a pulling force can be applied such that the emboss **64** will be pulled into the lance **88.** With enough pulling force, the emboss **64** will drag across the lance **88** raising the front panel **58** over the lance **88** until the emboss **64** is pulled on a frontward side **90** of the lance **88,** as illustrated in **FIGS. 9A-9B****.** The fiber optic equipment drawer **20** will thereafter be released from the chassis **12.** In this embodiment, optional keys **92** are cut into the emboss **64** to reduce the pulling force necessary for the emboss **64** to clear the interference with the lances **88.** The keys **92** can also serve to interfere with the lances **88** to retain the fiber optic equipment drawer **20** in a closed position. Also note in this embodiment, the embosses **64** are disposed in the raised sections **65** of the front panel **58** so the front panel **58** is clear of interference with the lances **88** when the fiber optic equipment drawer **20** is pulled out from the chassis **12.**

**FIGS. 9A and 9B** illustrate top and bottom perspective, close-up views of the drawer retention member **62** when the fiber optic equipment drawer **20** has been pulled outward from the chassis **12.** After the emboss **64** is located on the frontward side **90** of the lance **88,** the fiber optic equipment drawer **20** is free to be pulled out from the chassis **12.** In this embodiment, the fiber optic equipment drawer **20** is limited to a certain pull out distance. In this regard, **FIGS. 10A and 10B** illustrate one of two drawer pull-out limiting members **66** provided in the fiber optic equipment drawer **20.** The illustrated drawer pull-out limiting member **66** is disposed on the left side end **76** of the fiber optic equipment drawer **20.** Note that another pull out drawer pull-out limiting member **66** not illustrated in **FIGS. 10A and 10B** is also disposed on the right side end **78** of the fiber optic equipment drawer **20,** as illustrated in **FIG. 6****.** **FIG. 10A** is a front perspective view of the drawer pull-out limiting member **66** disposed in the rear panel **60** of the fiber optic equipment drawer **20** just prior to the fiber optic equipment drawer **20** being fully extended from the chassis **12.** As illustrated, the tab **68** disposed in the rear panel **60** of the fiber optic equipment drawer **20** is aligned with the lance **88** disposed in the chassis **12.** The front and rear panels **58, 60** sit above the chassis **12** and are free to move about the chassis **12** once the fiber optic equipment drawer **20** is released from the drawer retention member **62.** However, the lance **88** is disposed about the chassis **12** in the travel plane **TP** of the tab **68.** When the rear panel **60** is almost fully extended as illustrated in **FIG. 10A****,** the tab **68** is configured to enter an opening **94** disposed in the lance **88.** The rear panel **60** and thus the fiber optic equipment drawer **20** is prevented from extending out further from the chassis **12** once the tab **68** is fully engaged with the opening **94** in the lance **88,** as illustrated in **FIG. 10B****.** In this manner, the tab **68** and lance **88** provide the drawer pull-out limiting member **66** to limit the pull out distance of the fiber optic equipment drawer **20.**

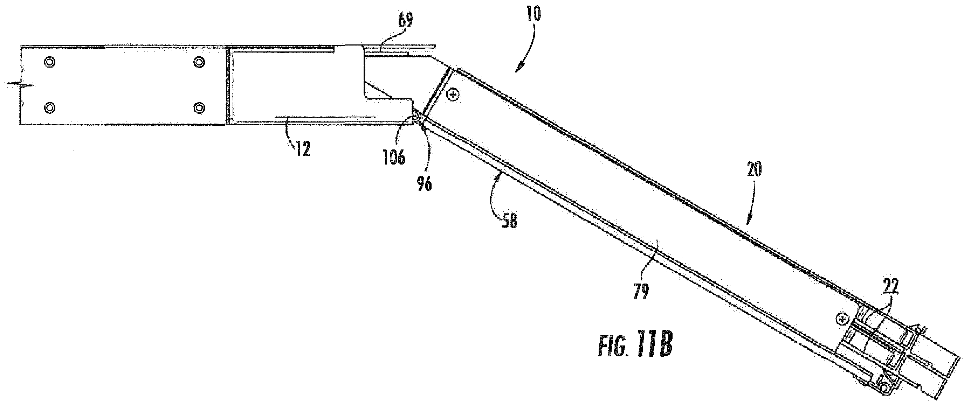

**FIGS. 11A-14** illustrate tilt and tilt limiting features of the fiber optic equipment drawer **20** according to one embodiment. **FIGS. 11A** **and** **11B** illustrate the fiber optic equipment drawer **20** pulled out from the chassis **12** and tilted downward about the chassis **12.** As previously discussed, tilting the fiber optic equipment drawer **20** downward can provide enhanced access to the fiber optic equipment trays **22** and the fiber optic modules **26** disposed in the fiber optic equipment trays **22** and/or their fiber optic connections. **FIG. 11A** illustrates a front perspective view of the fiber optic equipment drawer **20** pulled out from the chassis **12** and tilted downward. **FIG. 11B** is a side view of the orientation of the fiber optic equipment drawer **20** illustrated in **FIG. 11A****.** In this embodiment, the front panel **58** can tilt downward about the rear panel **60.** The rear panel **60** remains oriented in a plane parallel or substantially parallel to the chassis **12.** Because the fiber optic equipment trays **22** and fiber optic modules **26** contained therein are disposed in the front panel **58,** tilting of the front panel **58** also tilts the fiber optic equipment trays **22** and fiber optic modules **26** for access.

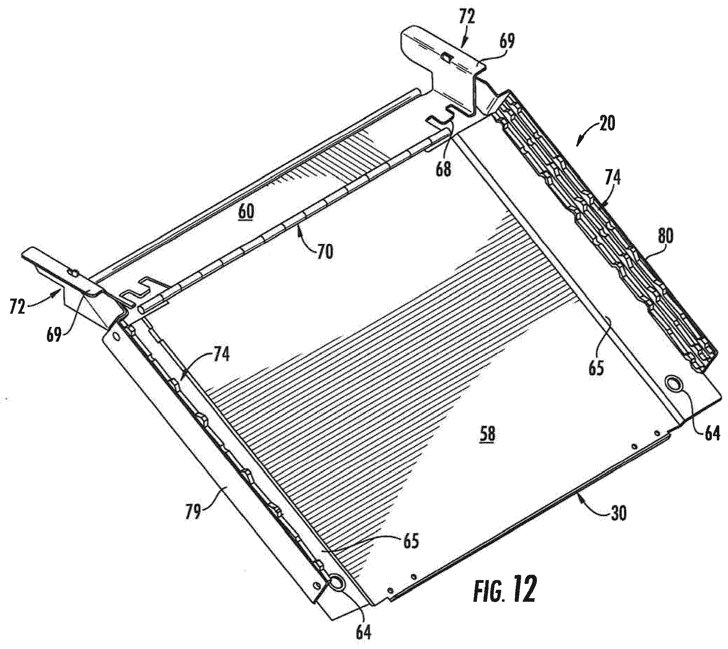

The fiber optic equipment drawer **20** is configured to tilt downward via the hinge **70** disposed between the front panel **58** and the rear panel **60** of the fiber optic equipment drawer **20** in this embodiment. The hinge **70** is formed by rolled portions **98** on a front end **100** of the rear panel **60** interleaved with rolled portions **102** on a rear end **104** of the front panel **58.** When interleaved, the rolled portions **98, 102** form a passage (not shown) therebetween extending from the left side end **76** to the right side end **78** of the front and rear panels **58, 60.** A rod (not shown) is extended through a passage **106 (****FIG. 11B****)** to maintain the rolled portions **98, 102** interleaved together to provide the hinge **70.** When the fiber optic equipment drawer **20** is pulled out such that the front panel **58** is pulled out beyond the chassis **12,** the front panel **58** is free to tilt downward about the hinge **70.** The tilt angle is controlled by drawer tilt limiting members **72** as illustrated in **FIGS. 12-14** and described below.

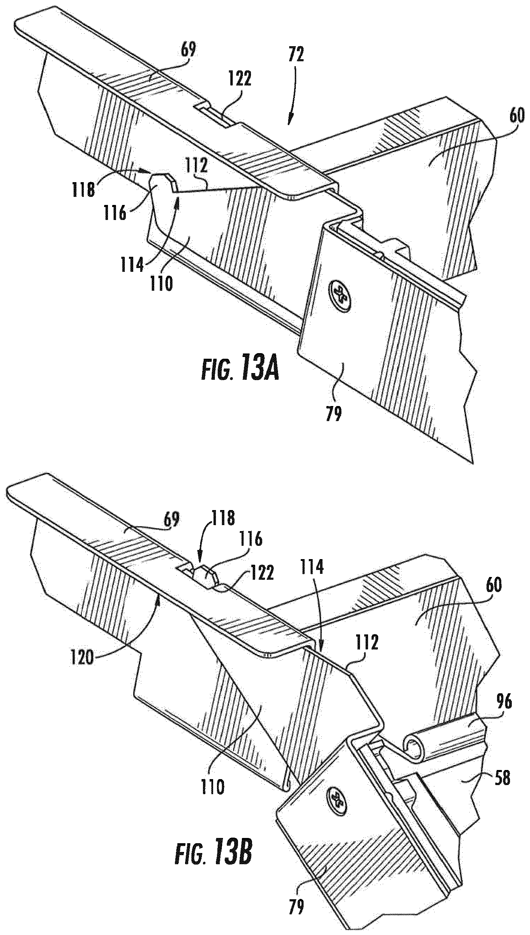

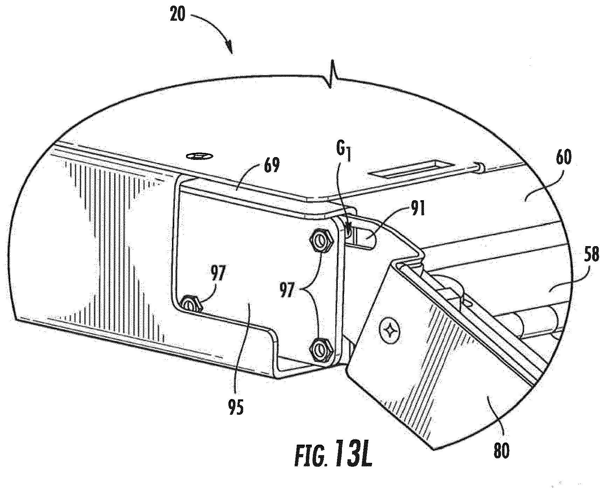

**FIG. 12** illustrates a front perspective view of the fiber optic equipment drawer **20** tilted downward without installed fiber optic equipment trays **22** and fiber optic modules **26.** As illustrated therein, the tilt angle of the front panel **58** of the fiber optic equipment drawer **20** is limited by the drawer tilt limiting members **72** and the flanges **69.** **FIGS. 13A-13C** illustrate the drawer tilting limiting members **72** in more detail. As illustrated in **FIGS. 13A-13C****,** the illustrated drawer tilt limiting member **72** is provided on the left side end **76** of the fiber optic equipment drawer **20.** Note that another drawer tilt limiting member **72** not illustrated in **FIGS. 13A-13C** is also disposed on the right side end **78** of the fiber optic equipment drawer **20,** as illustrated in **FIG. 12****.**

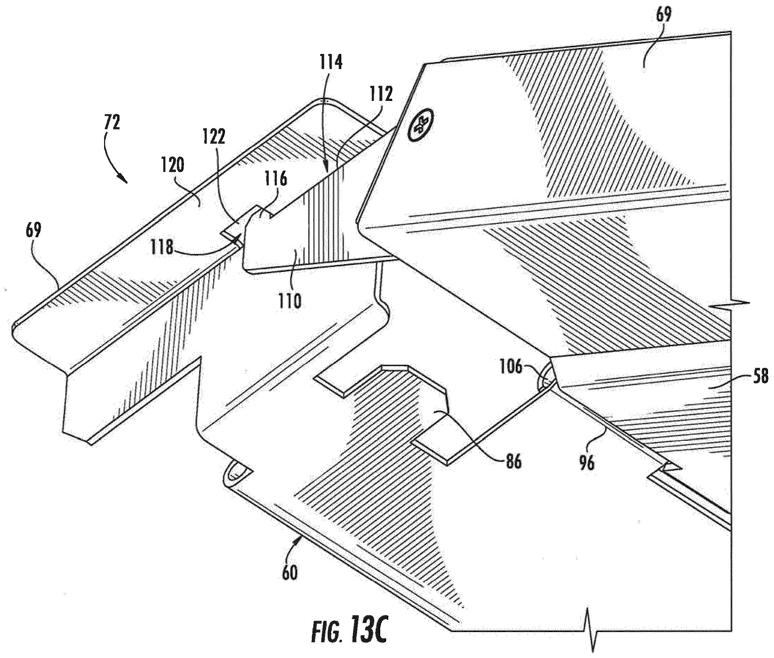

**FIG. 13A** is a top perspective close-up view of the drawer tilt limiting member **72** when the fiber optic equipment drawer **20** is fully pulled out from the chassis **12,** but the front panel **58** is not yet tilted. The drawer tilt limiting member **72** includes a limiting member **110** fixedly attached or provided as a part of the front panel **58** as a single part and arranged orthogonal or substantially orthogonal to the base **82 (****FIG. 7****)** of the front panel **58.** The limiting member **110** contains an angle **112** disposed in a top surface **114** of the limiting member **110.** A key **116** is disposed on an end section **118** of the limiting member **110** adjacent the angle **112.** When the fiber optic equipment drawer **20** is pulled out fully such that the tab **68** is engaged with the lance **88** (**FIG. 11A**), the front panel **58** can tilt downward about the hinge **70.** When the front panel **58** is tilted downward, the hinge **70** provides a fulcrum such that the limiting member **110** moves upward towards the flange **69.** The tilt angle of the front panel **58** is limited by the angle **112** in the limiting member **110** and flange **69.** The angle **112** in the limiting member **110** will eventually come into planar or substantially planar contact with a bottom side **120** of the flange **69,** as illustrated in **FIGS 13B** **and** **13C**, to prevent further tilting of the front panel **58.** **FIG. 13C** illustrates a bottom perspective view of the drawer tilt limiting member **72** of **FIG. 13B****.**

To prevent the fiber optic equipment drawer **20** from inadvertently being pushed back into the chassis **12** when tilted, a notch **122** is disposed in the flange **69** as part of the drawer tilt limiting member **72.** The notch **122** is configured to receive the key **116** disposed in the limiting member **110.** When the key **116** is received in the notch **122,** the fiber optic equipment drawer **20** cannot be pushed back into the chassis **12.** When it is desired to retract the fiber optic equipment drawer **20** back into the chassis **12,** a force is applied to pull up the front panel **58** to reduce the tilt angle thereby pushing the key **116** downward and out of the notch **122.** While continuing to pull or hold up the front panel **58,** the fiber optic equipment drawer **20** is free to be pushed back into the chassis **12.** In this embodiment, the drawer tilt limiting members **72** are not provided as part of the chassis **12.** The drawer tilt limiting members **72** are provided as part of the fiber optic equipment drawer **20** in both the front panel **58** and the rear panel **60.** In this manner, the fiber optic equipment drawer **20** is not required to provide a fixed connection or linkage to the chassis **12.** This may be advantageous to provide flexibility and reduced complexity, including in the installation of the fiber optic equipment drawers **20** in the chassis **12.** The drawer tilt limiting members **72** are not required to be limited to the fiber optic equipment drawer **20.**

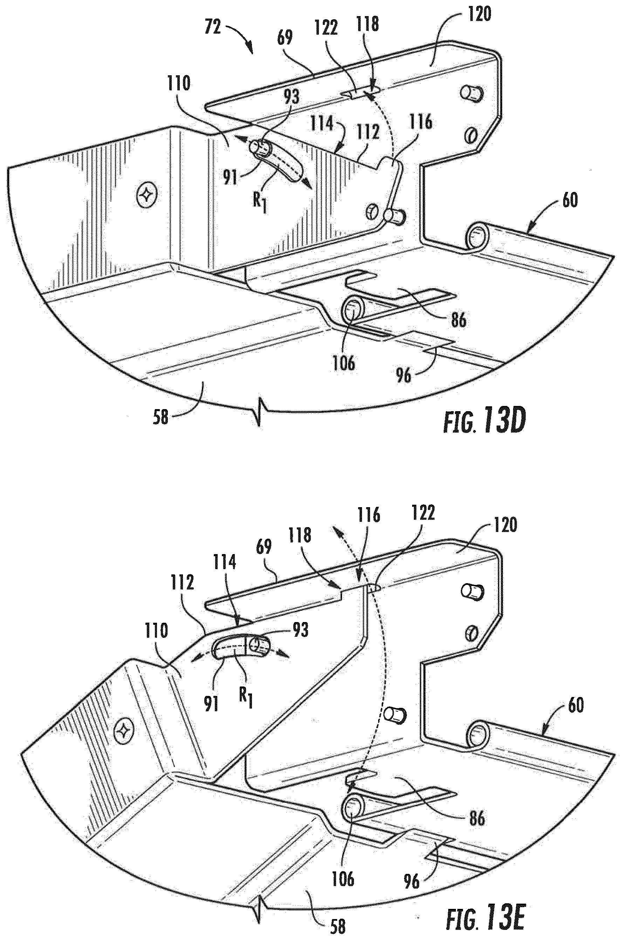

As discussed above, the key **116** and the angle **112** disposed in the tilt limiting member **72** limits the tilting of the front panel **58** about the rear panel **60** in the embodiments of **FIG. 13A-13C****.** It may also be desired to provide an additional tilt limiting member to provide supplemental tilt limiting of the front panel **58** about the rear panel **60.** In this regard, **FIGS. 13D and 13E** are close-up, bottom perspective views of the tilt limiting member **72** of **FIGS. 13A-13C****,** but further including an optional slot **91** disposed in the limiting member **110.** The slot **91** is configured to further limit the tilt angle of the front panel **58.** The front panel **58** illustrated in **FIG. 13D** is not tilted. The front panel **58** illustrated in **FIG. 13E** is tilted. In this regard, a pin **93** is attached to and extends outward from the flange **69** in this embodiment. The pin **93** is configured to engage with the slot **91** disposed in the limiting member **110** when the fiber optic equipment drawer **20** is assembled. The slot **91** confines the boundary of movement of the pin **93,** and thus also limits tilting of the front panel **58** about the rear panel **60** since the pin **93** is attached to the flange **69,** which is part of the rear panel **60.**

The slot **91** is radial in shape such that the pin **93** moves along the radius of the slot thus allowing the front panel **58** to tilt. The radial length **R₁** of the slot **91,** as illustrated in **FIGS. 13D and 13E****,** controls the maximum tilt angle of the front panel **58** in addition to the angle **112** disposed in the limiting member **110.** Note that the limiting member **110** does not require the slot **91** and pin **93** arrangement discussed herein to limit the tilt angle of the front panel **58.** Further, the slot **91** and pin **93** arrangement could be provided in the fiber optic equipment drawer **20** in lieu of the key **116** and angle **112** disposed in the limiting member **110** arrangement.

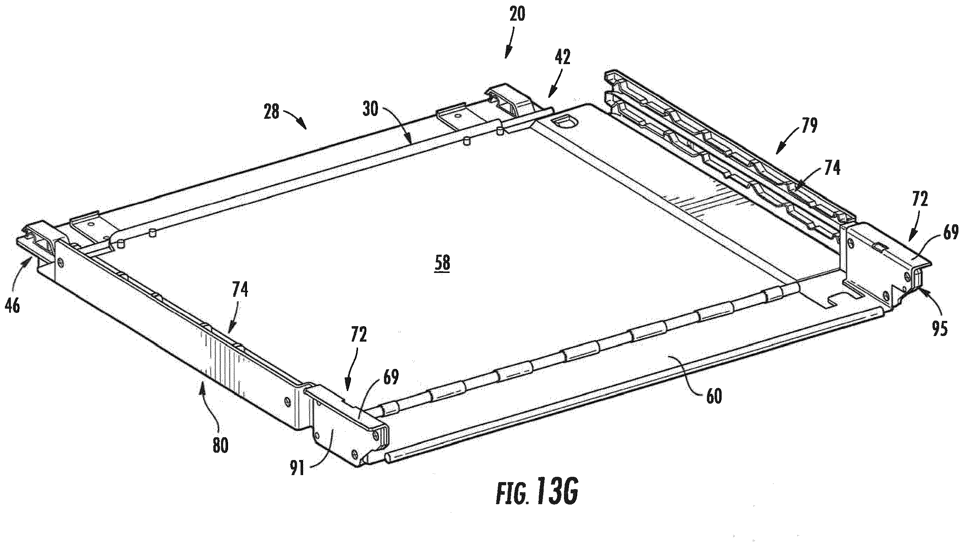

As previously discussed above, the flanges **69** are provided as part of the rear panel 60 to ride along the inside of the chassis **12** as the fiber optic equipment drawer **20** is pulled out from the chassis **12.** The flanges **69** provided as part of the rear panel **60** each contain the tilt limiting members **72** to limit the downward tilting of the fiber optic equipment drawer **20** about the rear panel **60** and the chassis **12.** As the flanges **69** ride inside the chassis **12**, the flanges **69** may move inward or outward from the rear panel **60**, and splay with regard to the front panel **58.** In this regard, optional control plate **95** may be provided as illustrated in **FIGS. 13G-13L** and discussed in more detail below.

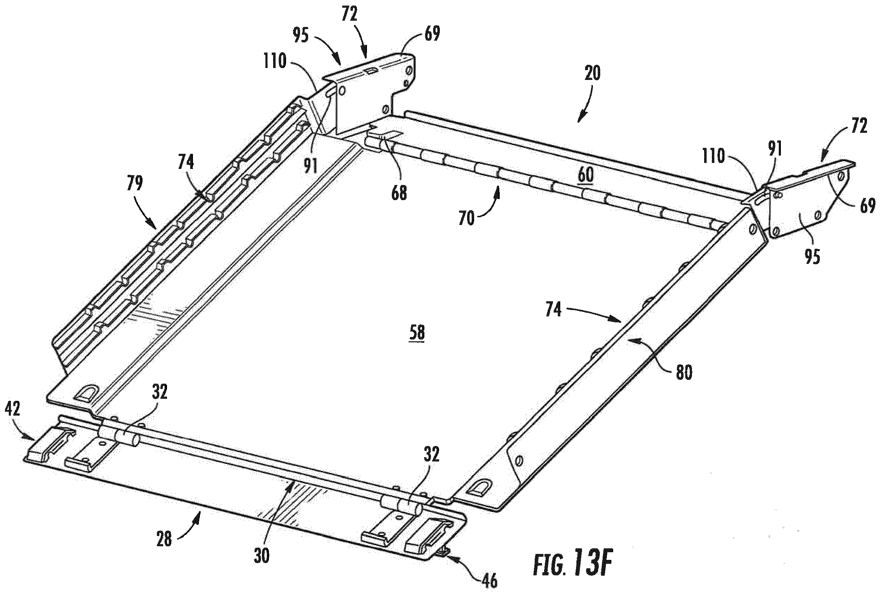

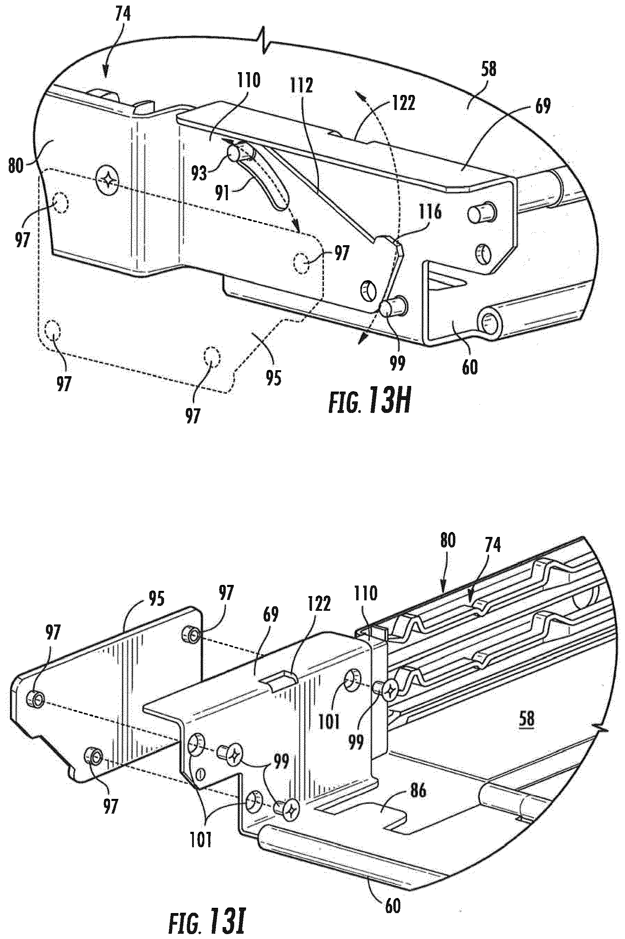

**FIGS. 13F** **and** **13G** are front and rear perspective views, respectively, of the fiber optic equipment drawer **20** of **FIG. 7****.** The limiting members **110** of **FIGS. 13D and 13E** are disposed between the flange **69** and the control plate **95.** The control plate **95** is configured to provide splay control for the flanges **69** as they move about the chassis **12.** Thus, the control plates **95** provide splay control to prevent or reduce splaying of the rear panel **60** with regard to the front panel **58.** Providing splay control may provide further stability between the fiber optic equipment drawer **20** and the chassis **12.** **FIGS. 13H-13L** illustrate more detail regarding embodiments of the controls plates **95** and will be described below.

**FIGS. 13H and 13I** are close-up, left and right perspective views, respectively, of the fiber optic equipment drawer **20** and the tilt limiting member **72** in **FIGS. 13F** **and** **13G****.** **FIGS. 13H and 13I** illustrate an example of how the control plate **95** can be attached to the flanges **69** attached to the rear panel **60.** **FIG. 13H** illustrates the control plate **95** in outline form so that the relationship of the control plate **95** to the limiting member **110** and the flange **69** can be easily viewed. **FIG. 13I** illustrates how the control plate **95** can be attached to the flange **69** in this embodiment. In this embodiment, the control plate **95** is attached to the flange **69** such that the limiting member **110** is disposed between the control plate **95** and the flange **69.** If the limiting member **110** moves outward from the flange **69,** such as when the front and rear panels **58, 60** are moving about the chassis **12,** the control plate **95** will limit movement of the flange **69** in this direction. In this regard, the control plate **95** controls splaying of the rear panel **60** and thus the front panel **58.** The flange **69** will limit the movement of the limiting member **110** in the inward direction.

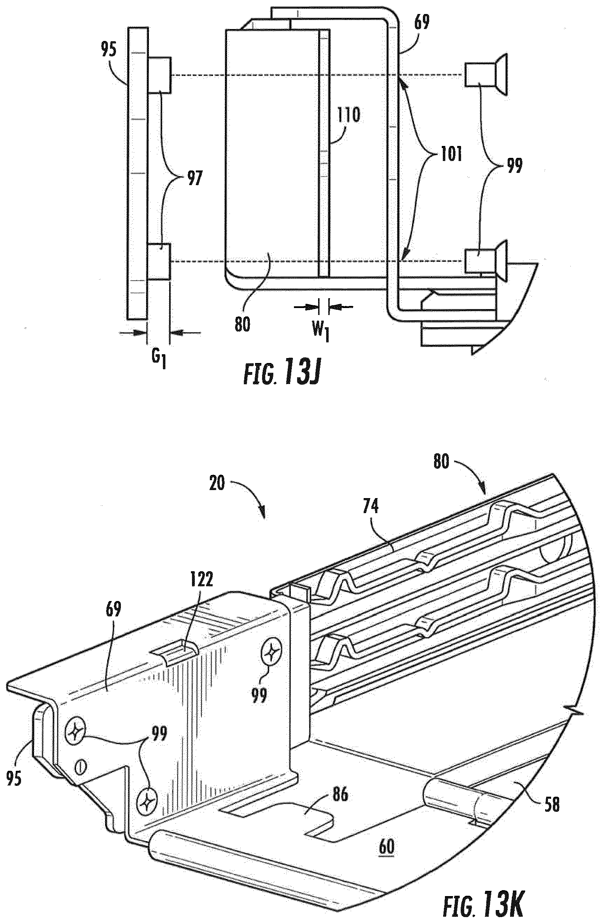

As illustrated in **FIGS. 13H and 13I****,** the control plate **95** contains a plurality of standoff receptacles **97** in this embodiment. The standoff receptacles **97** are configured to provide a gap **G₁** between the control plate **95** and the flange **69,** as illustrated in **FIG. 13J** illustrating the control plate **95,** limiting member **110,** and flange **69** in a side view. The control plate **95** is secured to the flange **69** via fasteners **99** disposed through orifices **101** in the flange **69** in this embodiment. This is further illustrated in the close-up, right and left perspective views of **FIGS. 13K and 13J**, respectively. As illustrated therein, the control plate **95** is attached to the flange **69** such that the limiting member **110** is disposed therebetween. With reference back to **FIG. 13I****,** the standoff provided by the standoff receptacles **97** maintains the gap **G₁** between the control plate **95** and the flange **69** so that the limiting member **110,** and thus the front panel **58,** is free to tilt downward and be returned in a non-tilting configuration. The gap **G₁** can be controlled to provide the desired splay control. For example, in one embodiment, the gap **G₁** may be 0,1651 cm (0.065 inches). As illustrated in **FIG. 13J****,** the width **W₁** of the limiting member **110,** may be desired to be less than the gap **G₁** so the limiting member **110** is free to rotate when the front panel **58** is tilted. For example, the width **W₁** of the limiting member **110** may be 0,1524 cm (0.060 inches). Note that the control plate **95** is not required to be provided in the fiber optic equipment drawer **20.** The control plate **95** can also be provided regardless of whether the slots **91** are provided in the limiting members **110.**

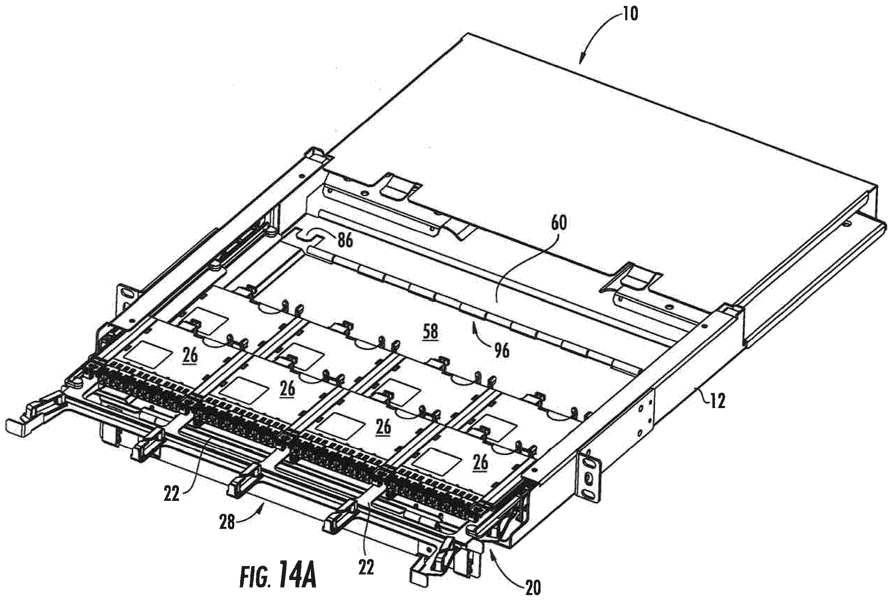

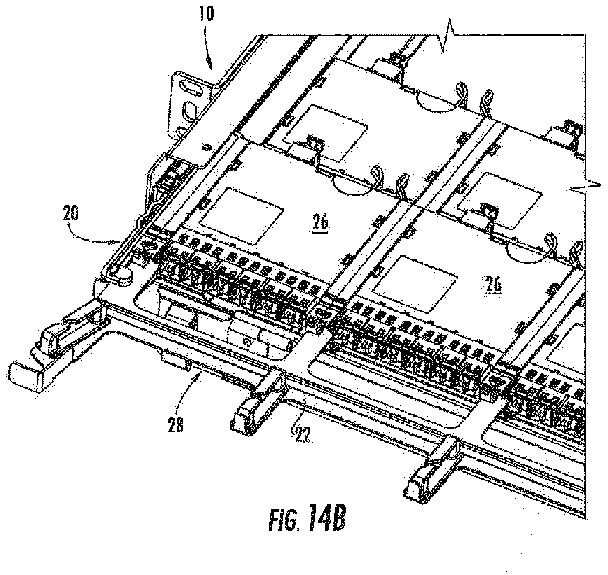

Another feature of the fiber optic equipment drawer **20** is support of one or more fiber optic equipment trays **22** which are each configured to support one or more fiber optic modules **26.** In this embodiment, the front panel **58** of the fiber optic equipment drawer **20** supports the fiber optic equipment trays **22.** As illustrated in **FIGS. 14A** **and** **14B****,** the fiber optic equipment drawer **20** is configured so that each fiber optic equipment tray **22** can be independently moved about the fiber optic equipment drawer **20** to provide enhanced access to the fiber optic modules **26** supported therein. **FIG. 14A** illustrates a perspective view of the fiber optic equipment drawer **20** with one fiber optic equipment tray **22** pulled out from the fiber optic equipment drawer **20** to provide access to the fiber optic modules **26** contained therein. **FIG. 14B** illustrates a close-up view of **FIG. 14A****.** More detail regarding the fiber optic equipment trays **22** and their retention in and pull out features from the fiber optic equipment drawer **20** are described below and illustrated in more detail in **FIGS. 15-20****.**

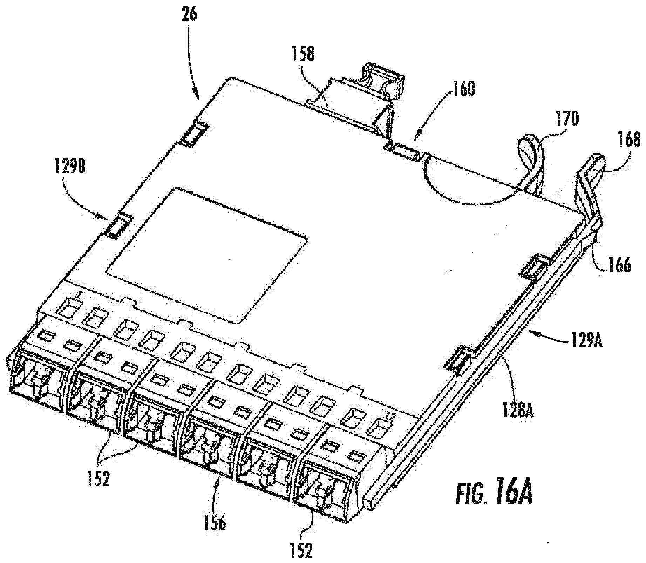

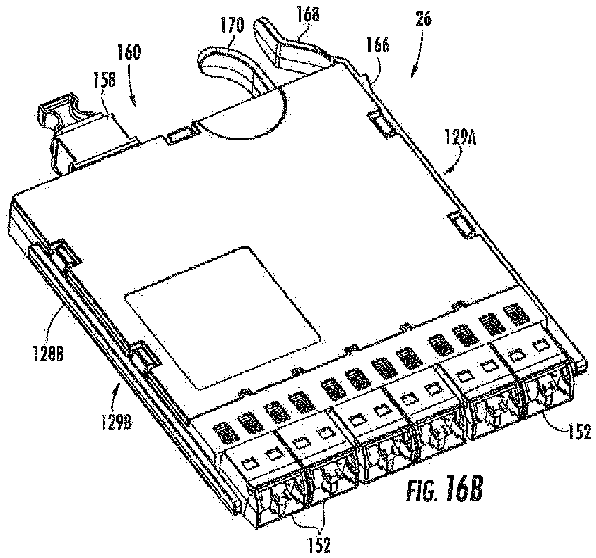

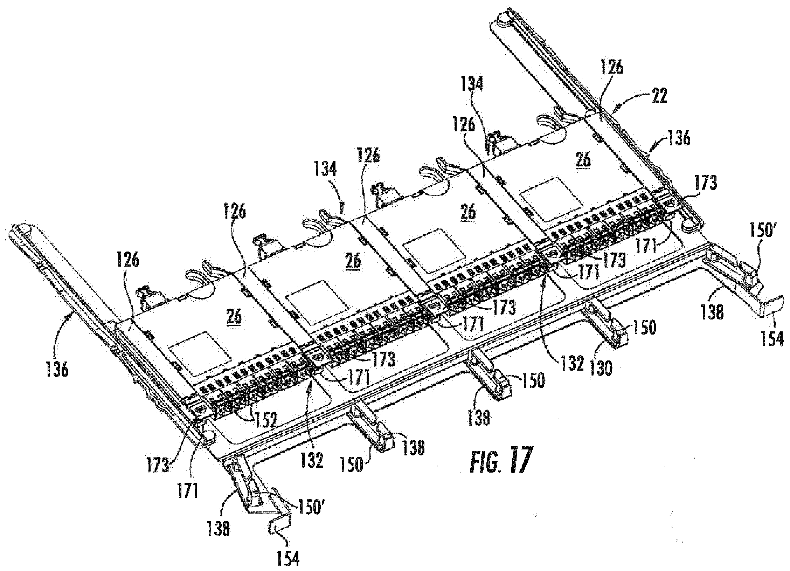

**FIG. 15** is a front perspective view of the fiber optic equipment tray **22** removed from the fiber optic equipment drawer **20** and without installed fiber optic modules **26.** As illustrated therein, the fiber optic equipment tray **22** contains a plurality of module guides **124** in the form of module rail guides **126** that support fiber optic modules **26** (not shown). As illustrated in right and left side perspective views in **FIGS. 16A** **and** **16B****,** the fiber optic modules **26** contain module rails **128A, 128B** on each side **129A, 129B** in this embodiment. The module rails **128A, 128B** are configured to be inserted into tray channels **130** (**FIG. 15**) disposed within the module rail guides **126,** as illustrated in **FIG. 17****.** As illustrated in **FIG. 15****,** the module rail guides **126** are disposed in a row arrangement if at least one intermediate module rail guide **126'** is disposed in the fiber optic equipment tray **22.** Fiber optic modules **26** can be independently moved within the module rail guides **126, 126'** in the fiber optic equipment tray **22** either towards a front end **132** or a rear end **134** of the fiber optic equipment tray **22.** Support members **135** may also be disposed in the fiber optic equipment trays **22** to support the weight of fiber optic modules **26** disposed in and between the module rail guides **126, 126'.** The module rail guides **126, 126'** will be referred to collectively hereinafter as element **126.**

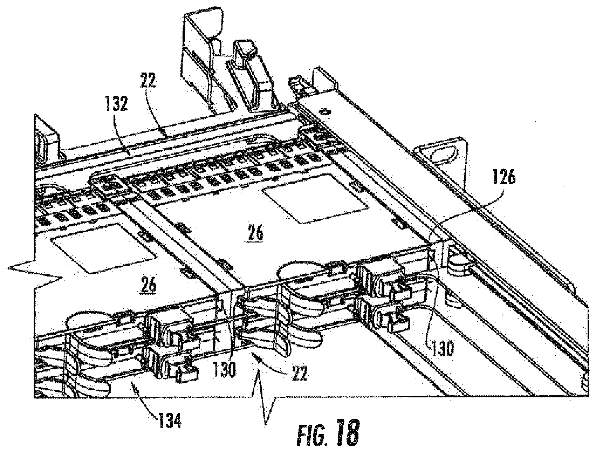

Note that in the fiber optic equipment tray **22** of **FIG. 15****,** five (5) module rail guides **126** are provided to support up to four (4) fiber optic modules **26** therebetween. The module rail guides **126** are configured such that the tray channels **130** are open on both the front end **132** and the rear end **134** of the fiber optic equipment trays **22** as illustrated in **FIG 18****.** This allows the fiber optic modules **26** to be either front-installable from the front end **132** or rear-installable from the rear end **134** into the fiber optic equipment trays **22,** and thus installable from either the front or the rear of the fiber optic equipment drawer **20** and the chassis **12.** Providing the capability of either front-installable or rear-installable fiber optic modules **26** may be advantageous in allowing a technician to more easily install fiber optic modules **26** in the fiber optic equipment drawer **20** and establish fiber optic connections therewith more efficiently and conveniently. For example, fiber optic modules **26** can be inserted into the rear end **134** of the fiber optic equipment tray **22** in the module rail guides **126** and pushed forward within the module rail guides **126** until the fiber optic modules **26** reach a front end **132** of each fiber optic equipment tray **22.** A locking feature can be provided to prevent the fiber optic module **26** from extending beyond the front end **132** of the fiber optic equipment trays **22** unless a release is engaged. In this manner, the fiber optic modules **26** can be installed from the rear of the fiber optic equipment drawer **20** and chassis **12,** but can also be extended and removed from the front end **132** of the fiber optic equipment tray **22.**

As illustrated in **FIGS. 15** **and** **17**, the fiber optic equipment tray **22** also contains tray rails **136**. The tray rails **136** are configured to be received in the tray guides **74** disposed in the fiber optic equipment drawer **20** (**FIG. 6**) to retain and allow the fiber optic equipment trays **22** to move about the fiber optic equipment drawer **20**. The fiber optic equipment trays **22** can be moved in and out of the fiber optic equipment drawer **20** by their tray rails **136** moving within the tray guides **74**. In this manner, the fiber optic equipment trays **22** can be independently movable about the tray guides **74** in the fiber optic equipment drawer **20**. More detail regarding the tray rails **136** and their coupling to the tray guides **74** in the fiber optic equipment drawer **20** is discussed below with regard to **FIGS**. **19A-21**.

With continuing reference to **FIGS**. **15** **and** **17**, the fiber optic equipment tray **22** may also contain extension members **138**. Routing guides **150** may be conveniently disposed on the extension members **138** to provide routing for optical fibers or fiber optic cables connected to fiber optic adapters **152** in the fiber optic modules **26** (**FIG. 17**). The routing guides **150'** on the ends of the fiber optic equipment tray **22** may be angled with respect to the tray rails **136** to route optical fibers or fiber optic cables at an angle to the sides of the fiber optic equipment tray **22.** Pull tabs **154** may also be connected to the extension members **138** to provide a means to allow the fiber optic equipment tray **22** to easily be pulled out from and pushed into the fiber optic equipment drawer **20**.

**FIGS. 16A** **and** **16B** illustrate an example of a fiber optic module **26** that can supported in the fiber optic equipment tray **22** to provide fiber optic connections in the fiber optic equipment drawer **20**. **FIG**. **16A** illustrates a right perspective view of the fiber optic module **26**. **FIG**. **16B** illustrates a left perspective view of the fiber optic module **26**. As illustrated therein, the fiber optic module **26** is comprised of a number of fiber optic adapters **152** disposed on a front end **156** of the fiber optic module **26**. In this example, the fiber optic adapters **152** accept duplex LC fiber optic connectors. However, any fiber optic connection type desired can be provided in the fiber optic modules **26**. Another fiber optic adapter **158** is disposed on a rear end **160** of the fiber optic module **26.** In this example, the fiber optic adapter **158** is a multi-fiber MTP fiber optic adapter equipped to establish connections to multiple optical fibers (e.g., twelve (12) optical fibers). The fiber optic module **26** may also manage polarity between the fiber optic adapters **152** disposed on the front end **156** of the fiber optic module **26** and the fiber optic adapter **158** disposed on the rear end **160** of the fiber optic module **26**.

Module rails **128A**, **128B** are disposed on each side **129A**, **129B** of the fiber optic module **26**. The module rails **128A**, **128B** are configured to be inserted within the module rail guides **126** in the fiber optic equipment tray **22**, as previously discussed and illustrated in **FIG**. **17**. In this manner, when it is desired to install a fiber optic module **26** in the fiber optic equipment tray **22**, the front end **156** of the fiber optic module **26** can be inserted from either the front end **132** or the rear end **134** of the fiber optic equipment tray **22**. For example, the front end **156** of module rails **128A**, **128B** of the fiber optic module **26** can be inserted into module rail guides **126** starting from the rear end **134** of the fiber optic equipment trays **22**. In this manner, the fiber optic module **26** can be rear-installed in the fiber optic equipment tray **22** and the fiber optic equipment drawer **20**. The fiber optic module **26** can then be pushed forward within the module rail guides **126** until the fiber optic module **26** reaches the front end **132** of the fiber optic equipment trays **22**. In this manner, a technician can install a fiber optic connection to the fiber optic adapter **158** disposed on the rear end **160** of the fiber optic module **26** and can then install the fiber optic module **26** from the rear of the fiber optic equipment drawer **20** into the fiber optic equipment tray **22.**

**FIG. 18** illustrates a rear perspective view of the fiber optic modules **26** installed in fiber optic equipment trays **22** and the module rail guides **126** disposed therein. As illustrated therein, when the fiber optic module **26** is installed in the tray channel **130** of the module rail guides **126** from the rear end **134** of the fiber optic equipment tray **22**, the module rails **128A, 128B** of the fiber optic module **26** can then be moved towards the front end **132** until the fiber optic module **26** reaches a stop or locking feature disposed in the front end **132**. A locking feature in the form of a latch **166 (****FIGS. 16A** **and** **16B****)** engages a complementary detent disposed in the tray channel **130** of the module rail guides **126**. The latch **166** is inwardly biased such that the fiber optic module **26** can be installed in the module rail guides **126**, but cannot be pulled back towards the rear section **134** until the latch **166** is disengaged.

If it is desired to remove the fiber optic module **26** from the fiber optic equipment tray **22**, the fiber optic module **26** can be removed from either the front end **132** or the rear end **134** of the fiber optic equipment tray **22**. To remove the fiber optic module **26** from the rear end **132** of the fiber optic equipment tray **22**, the latch **166** is disengaged by pushing a lever **168 (****FIGS. 16A** **and** **16B****)** inward towards the fiber optic module **26** to release the latch **166** from the module rail guide **126.** To facilitate pushing the lever **168** inward towards the fiber optic module **26**, a finger hook **170** is provided adjacent to the lever **168** so the lever **168** can easily be squeezed into the finger hook **170**.

The fiber optic module **26** can be locked into place in the fiber optic equipment tray **22** by pushing the fiber optic module **26** forward to the front end **132** of the fiber optic equipment tray **22.** As illustrated in **FIG**. **17**, a locking feature in the form of a front stop **171** disposed in the module rail guides **126**. The front stop **171** prevents the fiber optic module **26** from extending beyond the front end **132**. When it is desired to remove a fiber optic module **26** from the fiber optic equipment tray **22**, a front module tab **173** also disposed in the module rail guides **126** and coupled to the front stop **171** can be pushed downward to engage the front stop **171**. As a result, the front stop **171** will move outward away from the fiber optic module **26** such that the fiber optic modules **22** are not obstructed from being pulled forward. The fiber optic module **26**, and in particular its module rails **128A**, **128B (****FIGS**. **16A** **and** **16B****)**, can be pulled forward along the module rail guides **126** to remove the fiber optic module **26** from the fiber optic equipment tray **22.**

As previously discussed and illustrated in **FIG. 7**, the tray guides **74** are disposed in the fiber optic equipment drawer **20** to allow fiber optic equipment trays **22** to be supported in the fiber optic equipment drawer **20**. More specifically, as illustrated in **FIG**. **15**, the tray rails **136** attached or provided as part of the fiber optic equipment tray **22** are configured to be received by the tray guides **74** to allow the fiber optic equipment drawer **20** to support fiber optic equipment trays **22.** The tray guides **74** allow the fiber optic equipment trays **22** to be moved in and out of the fiber optic equipment drawer **20** for enhanced access to fiber optic modules **26** supported by the fiber optic equipment trays **22**. **FIGS**. **19A** **and** **19B** illustrate more detail regarding the exemplary tray guides **74** disposed in the fiber optic equipment drawer **20**.

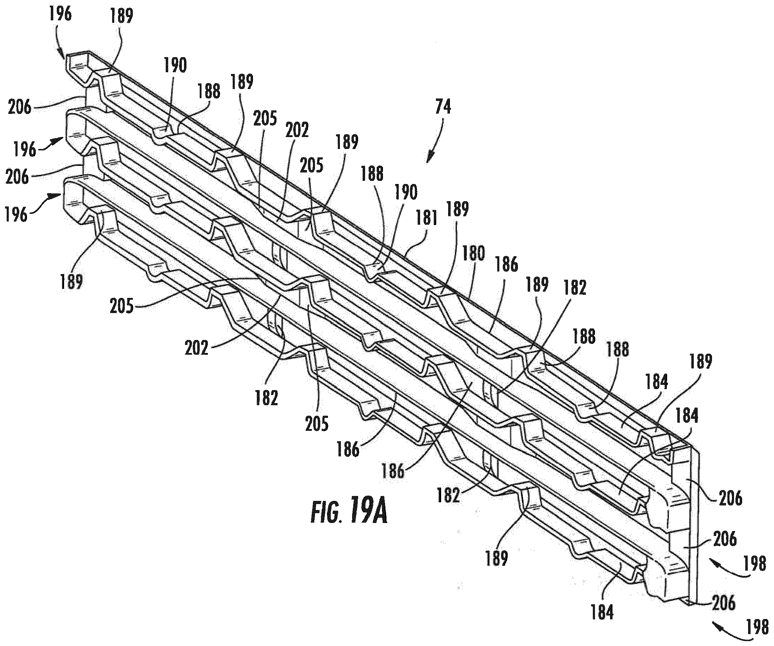

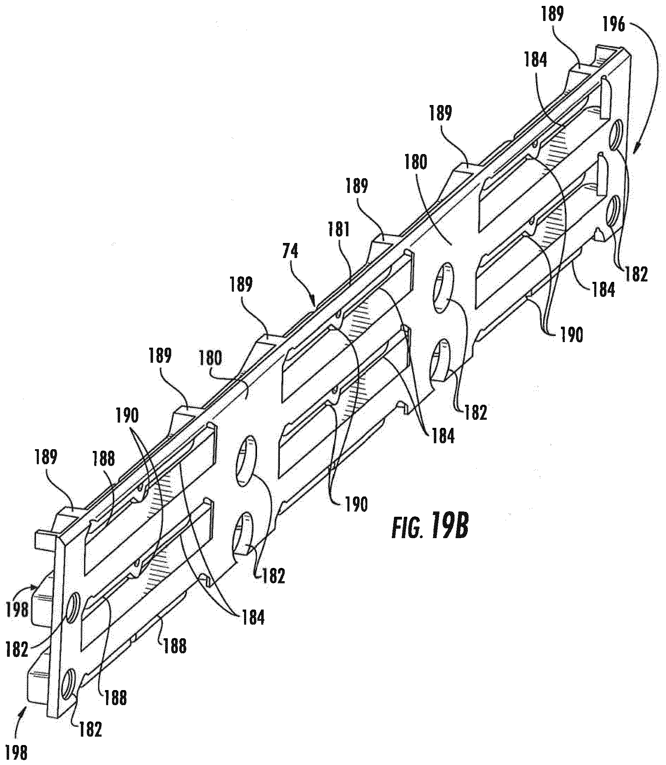

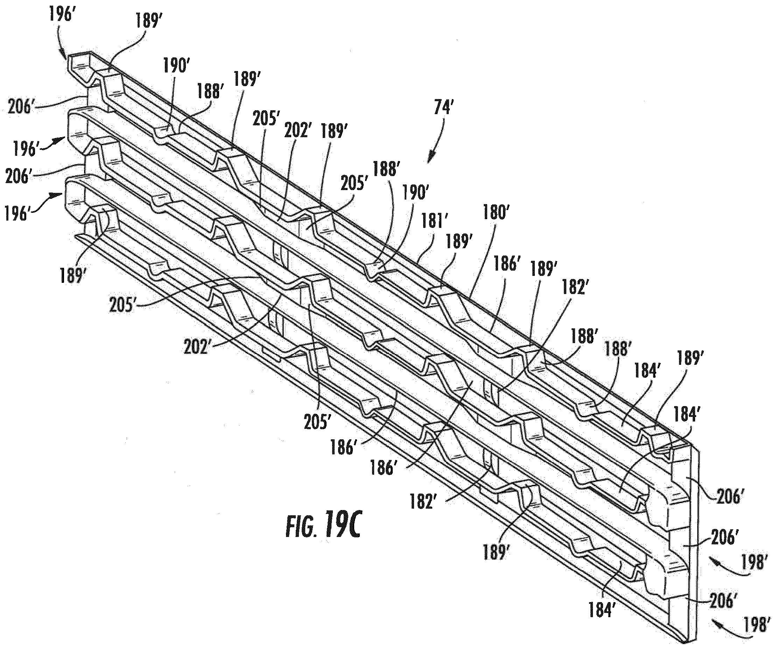

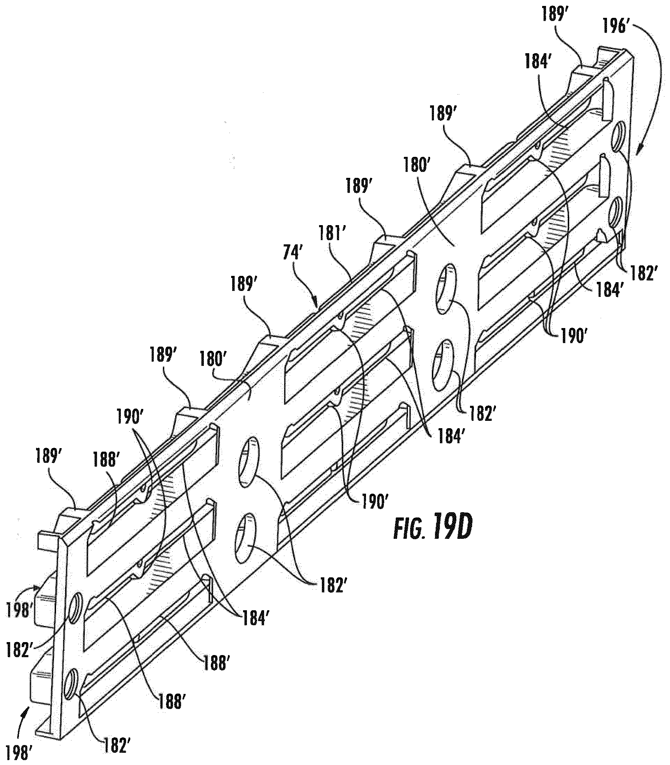

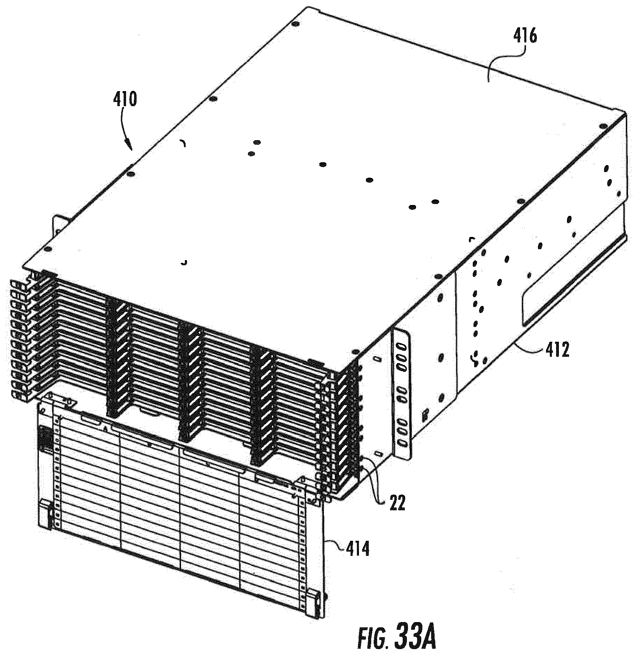

**FIGS. 19A** **and** **19B** illustrate left and right perspective views of the tray guide **74** disposed in the fiber optic equipment drawer **20** to support up to two (2) tray rails **136** in a 1-U space. **FIGS. 19C** **and** **19D** illustrate left and right perspective views of another embodiment of a tray guide **74'** that may be employed to support up to three (3) tray rails **136** per 1 -U space, as will be later described and illustrated with regard to **FIGS. 33A-35****.** The tray guides **74, 74'** contain like features and thus the description below with regard to tray guide **74** in **FIGS. 19A** **and** **19B** is equally applicable to the tray guide **74'** of **FIGS. 19C** **and** **19D****.** Like features or elements between tray guides **74, 74'** are illustrated with common element numbers, except that such features in tray guide **74'** will be appended with an apostrophe (').

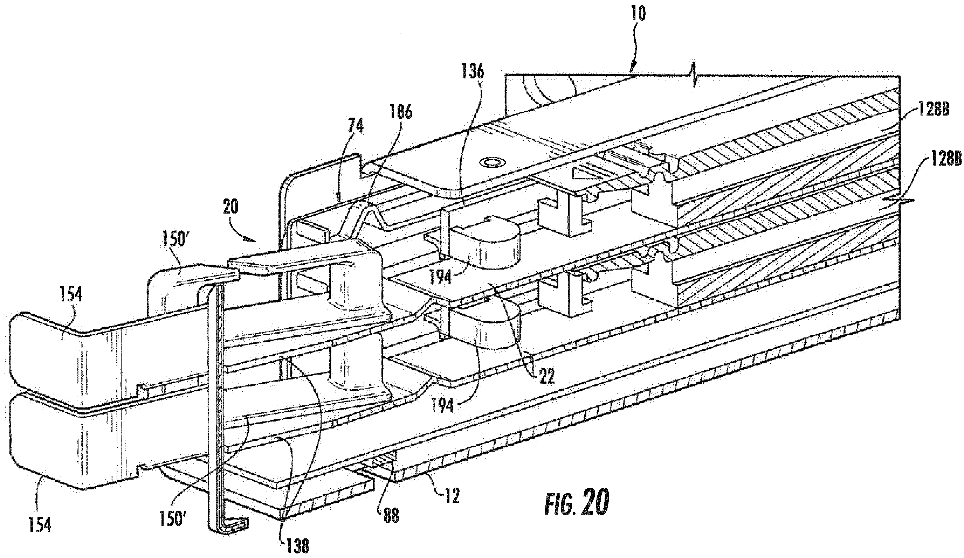

As discussed above, the tray guides **74** are configured to receive fiber optic equipment trays **22** supporting one or more fiber optic modules **26** in the fiber optic equipment drawer **20.** The tray guides **74** allow the fiber optic equipment trays **22** to be pulled out from the chassis **12,** as illustrated in **FIG. 14B****.** With continuing reference to **FIGS. 19A** **and** **19B**, the tray guide **74** in this embodiment is comprised of a guide panel **180.** The guide panel **180** is comprised of an elongated member **181.** The guide panel **180** may be constructed out of any material desired, including but not limited to a polymer or metal. The guide panel **180** contains a series of apertures **182** to facilitate attachment of the guide panel **180** to the fiber optic equipment drawer **20**, as illustrated in **FIG. 12****.** Guide members **184** are disposed in the guide panel **180** and configured to receive the tray rail **136** of the fiber optic equipment tray **22**, as illustrated in the cross-section diagram in **FIG. 20**. Three (3) guide members **184** are disposed in the guide panel **180** in the embodiment of **FIGS. 19A** **and** **19B** to be capable of receiving up to three (3) tray rails **136** of three (3) fiber optic equipment trays **22.** However, any number of guide members **184** desired may be provided. In this embodiment, the guide members **184** each include guide channels **186** configured to receive and allow tray rails **136** to move along the guide channels **186** for translation of the fiber optic equipment trays **22** about the fiber optic equipment drawer **20.**

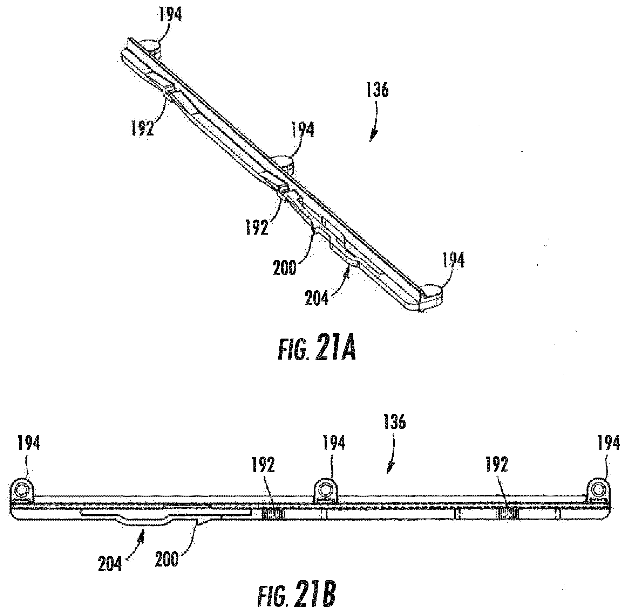

Leaf springs **188** are disposed in each of the guide members **184** of the tray guide **74** and are each configured to provide stopping positions for the tray rails **136** during movement of the fiber optic equipment tray **22** in the guide members **184**. The leaf springs **188** are disposed between ends **189** disposed in the guide member **184** to give the leaf springs **188** spring action. The leaf springs **188** each contain protrusions **190** that are configured to be received in detents **192 (****FIG. 21A and 21B****)** disposed in the tray rails **136** to provide stopping or resting positions. The tray rails **136** contain mounting platforms **194** that are used to attach the tray rails **136** to the fiber optic equipment trays **22.** It may be desirable to provide stopping positions in the tray guide **74** to allow the fiber optic equipment trays **22** to have stopping positions when moved in and out of the fiber optic equipment drawer **20**. Stopping positions allow the requirement of a technician to impart a certain force to pull or push the fiber optic equipment tray **22** about the guide panel **180** so that the fiber optic equipment tray **22** is retained in place when not pulled or pushed. However, the force can also be designed to allow a technician to easily push in or pull out the fiber optic equipment tray **22** into and from the guide panel **180** when desired, especially when the fiber optic equipment tray **22** is located above the technician. In this regard and by example, two (2) detents **192** in the tray rail **136** receive two (2) protrusions **190** in the tray guide **74** at any given time. When the fiber optic equipment tray **22** is fully retracted into the fiber optic equipment drawer **20** in a first stopping position, the two (2) detents **192** of the tray rail **136** are received in the one protrusion **190** adjacent a rear end **196** of the guide channel **186** and the middle protrusion **190** disposed between the rear end **196** and a front end **198** of the guide channel **186.** When the fiber optic equipment tray **22** is pulled out from the fiber optic equipment drawer **20,** the two (2) detents **192** of the tray rail **136** are received in the one protrusion **190** adjacent the front end **198** of the guide channel **186** and the middle protrusion **190** disposed between the rear end **196** and the front end **198** of the guide channel **186.** Thus, the stopping or resting positions provided by the engagement of the protrusions **190** of the leaf springs **188** with the detents **192** of the tray rail **136** in this embodiment are provided to require force on the guide panel **180** to overcome the stopping position to translate the tray rail **136** of a fiber optic equipment tray **22** disposed within the guide member **184.**

In this embodiment, each leaf spring **188** is designed to require approximately two (2) pounds (lbs.) of pulling force to allow the protrusion **190** in the leaf spring **188** to overcome the detent **192** disposed in the tray rail **136** for a total of four (4) lbs. pulling force (i.e., two (2) detents **192** in the tray rail **136** are engaged with two (2) protrusions **190** disposed in two (2) leaf springs **188**)**.** The pulling force required to overcome the engagement of the protrusion **190** in the detents **192** could be designed to be any pulling force desired. For example, the pulling force required to overcome the engagement of the protrusion **190** in the detents **192** could be designed to be greater than the pulling force required to engage or disengage a fiber optic connector from a fiber optic module **26** supported by the fiber optic equipment tray **22.** However, the pulling force required to overcome the engagement of the protrusion **190** in the detents **192** could be designed to be less than the pulling force required to clear interference with the lances **88** when the fiber optic equipment drawer **20** is pulled out from the chassis **12** (**FIGS. 8A and 8B**)**.** The leaf springs **188** in this embodiment are designed to each provide the same force, but such does not have to be the case. Further, the guide panel **180** and tray rail **136** could be designed to provide fewer stopping positions or only provide that one protrusion **190** is engaged with one detent **192** in each stopping or resting position.

When the tray rail **136** is in a stopped position, two (2) protrusions **190** disposed in two (2) leaf springs **188** are engaged with two (2) protrusions in the tray rail **136**, as previously discussed. In this embodiment, when the tray rail **136** is in a stopping position, the leaf springs **188** and their protrusions **190** and the complimentary detents **192** in the tray rail **136** are designed cooperatively such that the detents **192** do not impart a force on the protrusions **190.** Thus, the leaf springs **188** are in an unstressed state when the tray rail **136** is in a stopped position. This may be advantageous if the leaf springs **188** are made out of a material, such as a polymer material for example, where creep can occur over time, thus reducing the effectiveness of the leaf spring **188** over time. However, this feature is not a requirement for the design.

As the tray rail **136** is pulled within the guide channel **186**, a protrusion **200** disposed in the tray rail **136** and illustrated in **FIGS. 21A and 21B** is biased to pass over transition members **202** disposed between the leaf springs **188**, as illustrated in **FIG. 19A****.** The protrusion **200** is provided in a leaf spring **204** disposed in the tray rail **136**, as illustrated in **FIGS. 21A and 21B****.** The transition members **202** have inclined surfaces **205** that allow the protrusion **200** to pass over the transition members **202** as the fiber optic equipment tray **22** is being translated within the guide channel **186.** As the protrusion **200** contains the transition members **202**, the force imparted onto the protrusion **200** causes the leaf spring **204** to bend inward to allow the protrusion **200** to pass over the transition member **202**. To prevent the tray rail **136** and thus the fiber optic equipment tray **22** from being extended beyond the front end **198** and rear end **196** of the guide channel **186**, stopping members **206** are disposed at the front end **198** and rear end **196** of the guide channel **186**. The stopping members **206** do not have an inclined surface; thus, the protrusion **200** in the tray rail **136** abuts against the stopping member **206** and is prevented from extending over the stopping member **206** and outside of the front end **198** of the guide channel **186**.

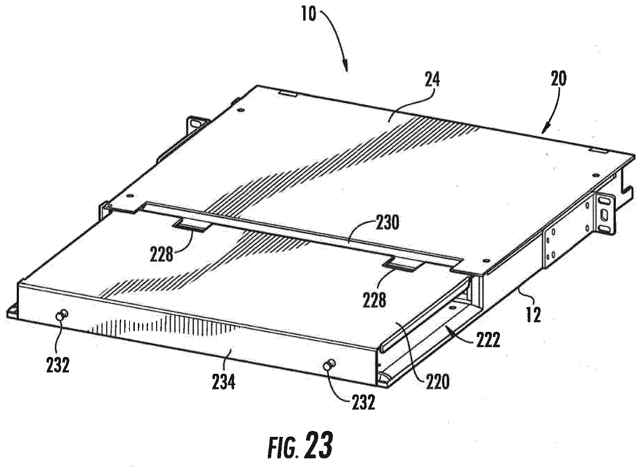

Now that the fiber optic equipment drawer **20**, fiber optic equipment trays **22** and fiber optic modules **26** have been described, other features that may be included in the fiber optic equipment **10** are now described. For example, **FIG**. **22** illustrates a rear perspective view of the fiber optic equipment **10** and chassis **12** of **FIG**. **1** configured to receive an optional rear cover **220**. The rear cover **220** can be employed to protect furcated cables (not shown) disposed in a rear area **222** of the chassis **12**. As illustrated in **FIG**. **22****,** a number of apertures **224** may be disposed in a raised area **226** in the rear area **222** of the chassis **12** to support securing furcations of trunk cables (not shown) coming into the chassis **12**. Trunk cables are run to the chassis **12** to establish fiber optic connection with fiber optic modules **26** disposed in the fiber optic equipment drawer **20**. The rear cover **220** contains overlapping members **228** that are configured to be received into a rear end **230** of the front chassis cover **24** to be secured to the chassis **12**, as illustrated in **FIG. 23**. The rear cover **220** can protect furcations connected to the raised area **226**. To secure the rear cover **230** to the front chassis cover **24**, the rear cover **230** may also include plungers **232** or other fastener devices in a rear panel **234** of the rear cover **230**. The plungers **232** engage with plunger receivers **236** disposed in flaps **238** in the rear area **222** of the chassis **12** to secure the rear cover **220** to the front chassis cover **24** and chassis **12.**

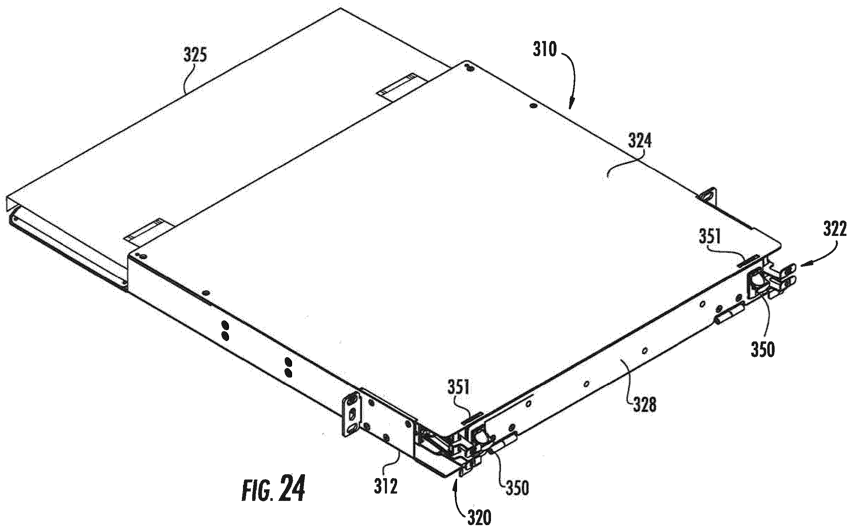

The embodiments described herein are not limited to the fiber optic equipment drawer **20** described above. Some or all of the features in the fiber optic equipment drawer **20** may be provided in other drawers, chassis, or other fiber optic equipment to support fiber optic modules and access thereto. For example, **FIGS. 24-32B** illustrate an alternate embodiment of fiber optic equipment that includes a fiber optic equipment drawer configured to support one or more fiber optic equipment trays each configured to support one or more fiber optic modules. In this regard, **FIG. 24** illustrates alternative exemplary fiber optic equipment **310** in this regard. The exemplary fiber optic equipment **310** may be provided at a data distribution center or central office to support cable-to-cable fiber optic connections and to manage a plurality of fiber optic cable connections. The fiber optic equipment **310** includes a fiber optic equipment chassis **312** ("chassis **312**"). The chassis **312** is configured to be installed in a fiber optic equipment rack if desired, such as the fiber optic equipment rack **14** previously discussed and illustrated in **FIG. 1****.** The chassis **312** illustrated in **FIG. 24** is 1U-size, but could be designed to be any other U-size desired, with "U" equaling a standard 4,445 cm (1,75 inches) in height, or any other height desired.

As illustrated in **FIG. 24** and discussed in greater detail below in this description, the chassis **312** includes a fiber optic equipment drawer **320** supporting one or more extendable fiber optic equipment trays **322.** The fiber optic equipment trays **322** are configured to support one or more fiber optic modules (not shown). The fiber optic equipment trays **322** in this embodiment are the same or essentially the same as the fiber optic equipment trays **22** previously discussed and illustrated in **FIGS. 14A-15** and 17. The fiber optic modules supported by the fiber optic equipment trays **322** can be the same or essentially the same as the fiber optic modules **26** previously discussed and illustrated in **FIGS. 16A** **and** **16B**. The fiber optic equipment trays **322** can be moved and extended from the fiber optic equipment drawer **320** and retracted back into the fiber optic equipment drawer **320**. Any number of fiber optic equipment trays **322** can be provided. Any number of fiber optic modules can be supported by the fiber optic equipment trays **322**. The view of the fiber optic equipment trays **322** in **FIG. 24** is obstructed by a front chassis cover **324** placed in front of the fiber optic equipment drawer **320** as part of the chassis **312.** The front chassis cover **324** is attached to a rear chassis cover **325** to form a cover over the chassis **312.** Latch orifices **351** are disposed in the front chassis cover **324** to support a drawer door locking mechanism employing push buttons **350** in this embodiment to lock a drawer door **328** to the front chassis cover **324**, as will be described in more detail below. The fiber optic equipment drawer **320** is extendable out from the chassis **312** to access the fiber optic equipment trays **322** and the fiber optic modules supported therein.

In the example of the fiber optic equipment **310** in **FIG. 24**, two fiber optic equipment trays **322** are supported by the fiber optic equipment drawer **320** with each fiber optic equipment tray **322** supporting four (4) fiber optic modules. Each fiber optic module can support any number of optical fiber connections. If the fiber optic modules included in the fiber optic equipment trays **322** support twelve (12) optical fiber connections, a total of up to ninety-six (96) optical fiber connections can be provided by the fiber optic equipment drawer **320**, although the fiber optic equipment drawer **320** is not limited to this density.

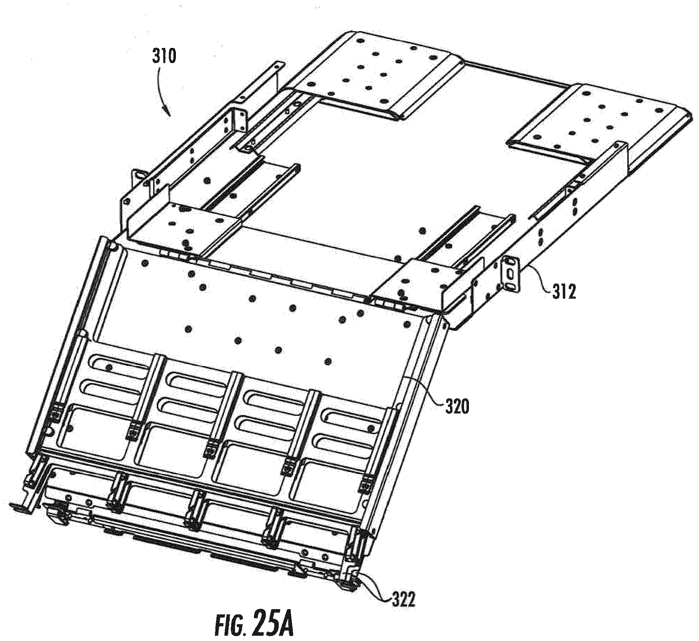

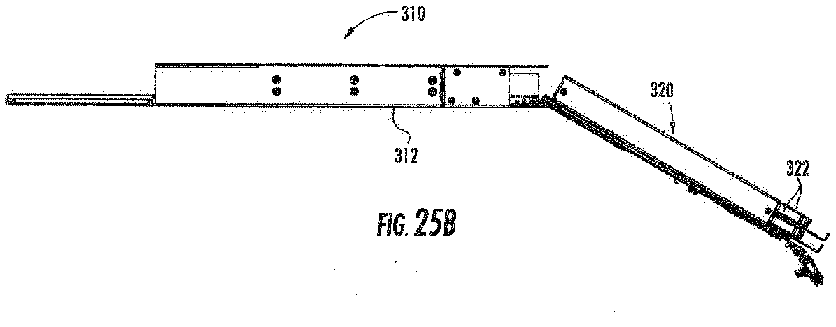

**FIGS. 25A** **and** **25B** are provided to summarize certain capabilities and features of the fiber optic equipment **310** and fiber optic equipment drawer **320** of **FIG**. **24**. Embodiments of these capabilities and features will be described in more detail in this description. **FIG**. **25A** is a front perspective view of the chassis **312** and fiber optic equipment drawer **320**. **FIG**. **25B** is a side view of the chassis **312** and fiber optic equipment drawer **320**. As illustrated in **FIG**. **25A**, the front chassis cover **324** and the rear chassis cover **325** (**FIG**. **24**) are removed from the chassis **312** so that fiber optic modules supported by the fiber optic equipment trays **322** inside the fiber optic equipment drawer **320** can be seen. The fiber optic equipment drawer **320** can be extended out from the chassis **312** to extend fiber optic modules installed in the fiber optic equipment trays **322** out from the chassis **312** to gain access to the fiber optic modules and the fiber optic connections therein. As illustrated in **FIGS. 25A** **and** **25B**, the fiber optic equipment drawer **320** is pulled or extended fully from the chassis **312** and tilted downward. The fiber optic equipment drawer **320** can be tilted downward to tilt the fiber optic modules installed in the fiber optic equipment trays **322** downward if desired, as illustrated in **FIGS. 25A** **and** **25B**. Tilting the fiber optic equipment drawer **320** downward may be particularly useful if the fiber optic equipment drawer **320** is located at taller heights in a fiber optic equipment rack. The desired fiber optic module to be accessed can be further separated for enhanced access, if desired, by pulling out the fiber optic equipment tray **322** supporting the fiber optic module from the fiber optic equipment drawer **320.**

As will be described in more detail below, each fiber optic equipment tray **322** is also independently translatable from the fiber optic equipment drawer **320,** whether or not the fiber optic equipment drawer **320** is extended out from the chassis **312** or tilted downward, similar to that provided in **FIG. 2A** **and** **2B** as an example. In this manner, enhanced access can be provided to the fiber optic modules provided in the fiber optic equipment trays **322.** Access includes installing, configuring, re-configuring, re-installing, and removing the fiber optic modules and the fiber optic connections provided therein as an example. Further, each fiber optic module installed in a fiber optic equipment tray **322** in this embodiment can be translated or removed independent from other fiber optic modules in a given fiber optic equipment tray **322** for further access, if desired.

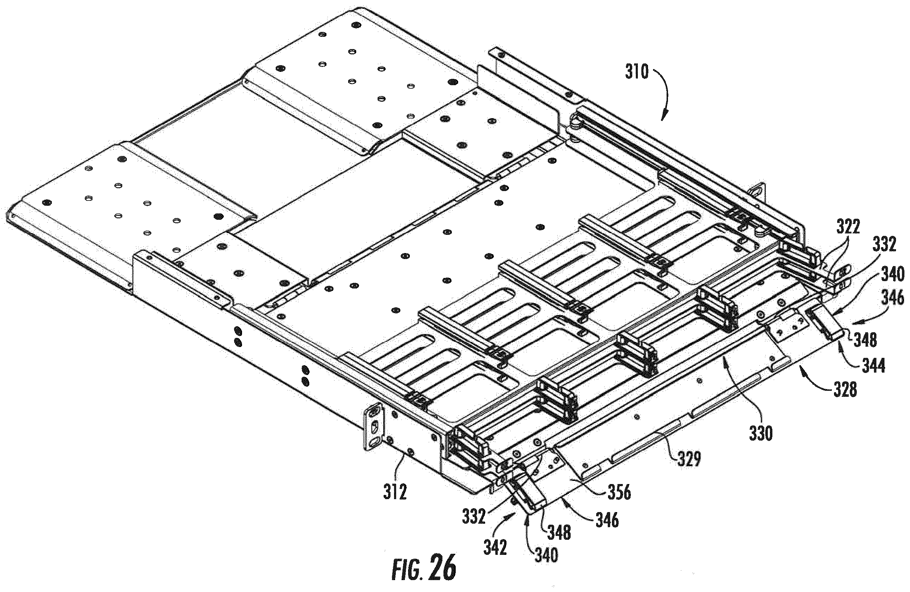

**FIGS. 26-32B** will now be referenced to describe the various capabilities and features of the fiber optic equipment **310** and fiber optic equipment drawer **320** of **FIG. 24** by example in more detail.

**FIG. 26** is a front perspective view of the fiber optic equipment **310** and fiber optic equipment drawer **320** of **FIG. 24** with the fiber optic equipment drawer **320** fully retracted into the chassis **312.** The front chassis cover **324** and rear chassis cover **325** are removed to facilitate discussion of the components of and inside the fiber optic equipment drawer **320.** The fiber optic equipment drawer **320** includes a drawer door **328** in this embodiment. The drawer door **328** controls access to the fiber optic equipment trays **322.** The drawer door **328** may also contain labeling that, for example, can be provided in a label holder **329** to identify optical fiber connections made in the fiber optic equipment drawer **320.** The drawer door **328** is illustrated as being opened in **FIG. 26****.** When the fiber optic equipment trays **322** are fully retracted into the fiber optic equipment drawer **320,** as illustrated in **FIG. 26**, the drawer door **328** can be closed and locked to the chassis **312** to close off access to the fiber optic equipment trays **322.** In this embodiment, the drawer door **328** is hingedly attached to a front end **330** of the fiber optic equipment drawer **320**. In this manner, the drawer door **328** is retained with the fiber optic equipment drawer **320** when the drawer door **328** is opened, as illustrated in **FIG. 26**.

To retain the drawer door **328** closed to the chassis **312** in this embodiment, a drawer door locking mechanism **340** is provided. The drawer door locking mechanism **340** is similar to the drawer door locking mechanism **40** previously discussed and illustrated in **FIGS. 3-5**. The drawer door locking mechanism **340** is configured to releasably retain the drawer door **328** closed to the chassis **312**, and more particularly to the front chassis cover **324**. As illustrated in **FIG. 26**, two drawer door locking mechanisms **340** are provided; one for a left side end **342** and one for a right side end **344** of the drawer door **328**. In this embodiment, the drawer door locking mechanism **340** is comprised of a push button latch **346** like or similar to the push button latch **46** previously discussed and illustrated in **FIG. 5**. The push button latch **346** is configured to engage a latch **348** with the latch orifice **351** (**FIG. 24**) disposed in the front chassis cover **324** to retain the drawer door **328** closed. Push button latches **346** are each disposed in the drawer door **328,** one on the left side end **342** and one on the right side end **344**, in this embodiment as illustrated in **FIG. 26**. Two latch orifices **351** (**FIG. 24**) are disposed in the front chassis cover **324** and configured to receive the latches **348** to lock the drawer door **328**. The push button latches **346** in this embodiment are spring-loaded such that when a force is not applied to the push buttons **350**, the latches **348** are biased upward to retain the latches **348** engaged with the latch orifices **351** when the drawer door **328** is closed.

When it is desired to pull out one or more of the fiber optic equipment trays **322**, the drawer door **328** can be unlocked from the front chassis cover **324** and opened. The push buttons **350** are configured to move the latches **348** downward to overcome the spring-loaded force in the push button latch **346** when a downward force is applied to the push buttons **350**, like the push buttons **50** previously described and illustrated in **FIGS. 3-5**. When the push buttons **350** are pushed downward, the latches **348** are disengaged from the latch orifices **351** in the front chassis cover **324** to unlock the drawer door **328.** The drawer door **328** can then be opened from the front chassis cover **324.** When opened, the drawer door **328** can swing downward about hinges **332.**

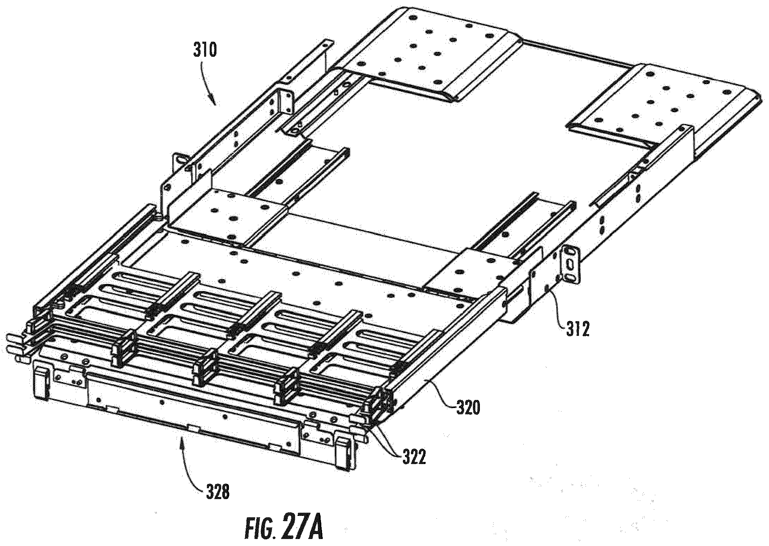

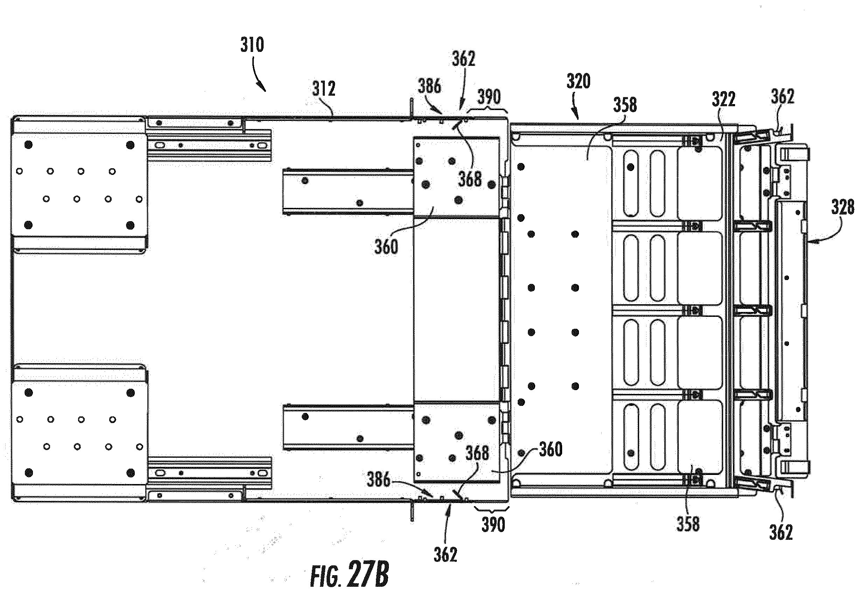

As previously discussed, the fiber optic equipment drawer **320** in the fiber optic equipment **310** is configured to be pulled out from the chassis **312** for enhanced access to the fiber optic equipments trays **322** and/or to the fiber optic modules contained therein. In this regard, **FIG. 27A** provides a front perspective view of the fiber optic equipment **310** and fiber optic equipment drawer **320** of **FIG. 24** with the drawer door **328** opened and lowered and the fiber optic equipment drawer **320** extended out from the chassis **312.** To further illustrate the fiber optic equipment drawer **320** and its various features and components, a top view of the fiber optic equipment drawer **320** is illustrated in **FIG. 27B****.** The fiber optic equipment drawer **320** is configured to provide several features, some or all which can be provided. In this embodiment, the fiber optic equipment drawer **320** includes a front panel **358** attached to a rear panel **360.** The front panel **358** and rear panel **360** may be formed from sheet metal or any other form or type of material desired. The front panel **358** is configured to support one or more fiber optic equipment trays **322** and fiber optic modules disposed in the fiber optic equipment trays **322**, as previously discussed and also illustrated in **FIG. 27A**.

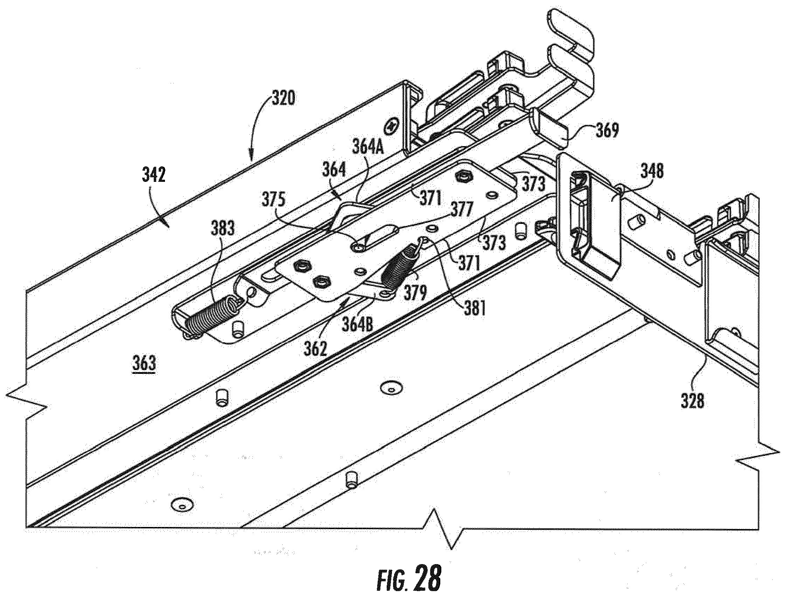

With continuing reference to **FIG. 27B**, the fiber optic equipment drawer **320** includes two drawer retention members **362** disposed in the front panel **358**. The two drawer retention members **362** are disposed on a bottom side **363** of the front panel **358** as illustrated in **FIG. 28**. The drawer retention members **362** are configured to releasably retain the fiber optic equipment drawer **320** in the chassis **312** until released to release the fiber optic equipment drawer **320** from the chassis **312.** The fiber optic equipment drawer **320** can be pulled out from the chassis **312** when the drawer retention members **362** are released.

In this embodiment, the drawer retention members **362** are provided in the form of elbow latches **364.** The elbow latch **364** contains two elbow sections **364A**, **364B** in this embodiment. One elbow latch **364** is illustrated in **FIG. 28**, because only the left side end **342** of the fiber optic equipment drawer **320** is illustrated. However, note that another drawer retention member **362** and elbow latch **364** are also disposed on the bottom side **363** of the front panel **358** on the right side end **344** of the fiber optic equipment drawer **320**. The elbow latches **364** are configured to align with and interfere with rearward biased latch engagement members **368** (**FIG. 27B**) disposed in the chassis **312** to retain the fiber optic equipment drawer **320** when retracted into the chassis **312**. In this regard, the elbow sections **364A** on each elbow latch **364** will be disposed on rearward sides **386** of the latch engagement members **368** (**FIG. 27A**) and configured to interfere with the latch engagement members **368** to retain the fiber optic equipment drawer **320** in the chassis **312**. When the drawer retention members **362** are released, the elbow latches **364** are pulled inward to clear interference of the latch engagement members **368** with the elbow sections **364A** to allow the elbow sections **364A** on each elbow latch **364** to pass unimpeded past the latch engagement members **368** and into a forward side **390** of the latch engagement members **368** (**FIG. 27A**) to allow the fiber optic equipment drawer **320** to be pulled out from the chassis **312.**

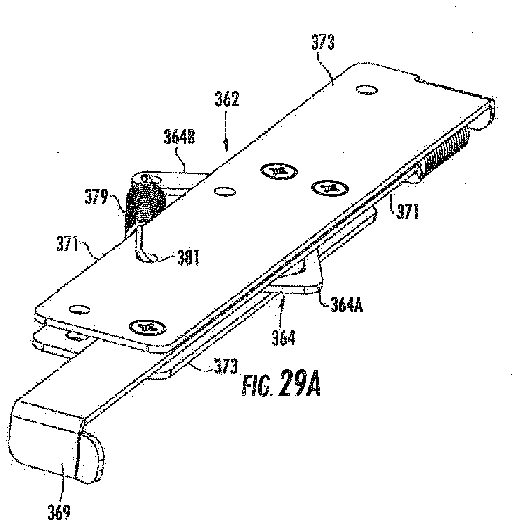

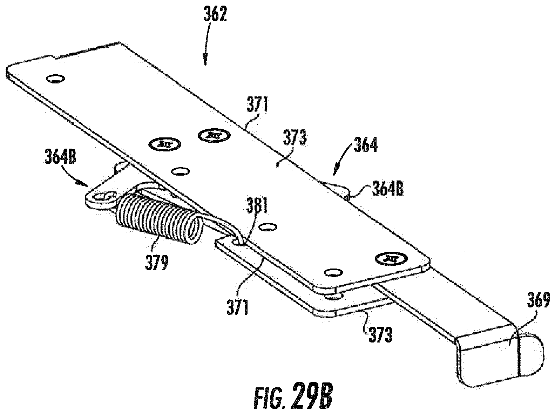

**FIGS. 28-29B** illustrate more detail regarding the drawer retention members **362.** **FIG. 28** illustrates a drawer retention member **362** disposed on the left side end **342** on the bottom side **363** of the front panel **358** of the fiber optic equipment drawer **320.** **FIGS 29A** **and** **29B** are perspective, isolated views of a drawer retention member **362** designed to be disposed on the right side end **344** of the bottom side **363** of the front panel **358** of the fiber optic equipment drawer **320**. As illustrated in **FIG. 28**, the drawer retention member **362** includes a drawer pull release **369**. The drawer pull release **369** is mechanically coupled to the elbow latch **364**. When the drawer pull release **369** is pulled, the elbow sections **364A**, **364B** collapse inward toward outside edges **371** of two parallel or substantially parallel plate members **373** of the drawer retention members **362**. A pin **375** connected to the elbow latch **364** and disposed in a slot **377** in a plate member **373** limits the pulling distance of the drawer pull release **369** and thus the distance of collapse to the elbow latch **364**. The elbow latch **364** in this embodiment is disposed between the plate members **373** so that the elbow latch **364** is free to expand and retract outside and inside, respectively, from the plate members **373**. When the elbow latch **364** is collapsed, the elbow sections **364A** of each elbow latch **364** will be able to clear the interference with the latch engagement member **362** thereby allowing the fiber optic equipment drawer **320** to be released from the chassis **312**. In this embodiment, because two drawer retention members **362** are included in the fiber optic equipment drawer **320**, both drawer pull releases **369** of the drawer retention members **362** are pulled to release the fiber optic equipment drawer **320**. However, one drawer retention member **362** could be provided so only one drawer pull release **369** would need to be pulled to release the fiber optic equipment drawer **320** from the chassis **312**.

A spring **379** can also be included in the elbow latch **364**, as illustrated in **FIGS. 28-29B**. Providing the spring **379** in the elbow latch **364** causes the elbow latch **364** to be biased outward in an expanded position. In this embodiment, the spring **379** is coupled inline to the elbow section **364B**, but could also be coupled inline to the elbow section **364A**, if desired. In this embodiment, the spring **379** is coupled between the elbow section **364B** and an orifice **381** disposed in a plate member **373**. Another spring **383** may also be coupled between the drawer pull release **369** and the fiber optic equipment drawer **320** as illustrated in **FIG. 28**. The spring **383** biases the drawer pull release **369** inward so the drawer pull release **369** retracts back towards the fiber optic equipment drawer **320** when a pulling force applied to the drawer pull release **369** is released.

After the fiber optic equipment drawer **320** is released from the chassis **312** via release of the drawer retention member **362**, the fiber optic equipment drawer **320** is free to be pulled out from the chassis **312**. The fiber optic equipment drawer **320** can be retracted in the chassis **312** to lock the fiber optic equipment drawer **320** in the chassis **312**. When the fiber optic equipment drawer **320** is retracted, the elbow sections **364A** of each elbow latch **364** will eventually come into contact with the latch engagement members **368** (**FIG. 27B**). Because the latch engagement members **368** are rearward biased, the contact between the latch engagement members **368** with the elbow sections **364A** as the fiber optic equipment drawer **320** is pushed into the chassis **312** will cause the elbow latch **364** to collapse inward. The elbow section **364A** will thereafter be disposed on the rearward side **386** of the latch engagement members **368** to retain the fiber optic equipment drawer **320** in the chassis **312**.

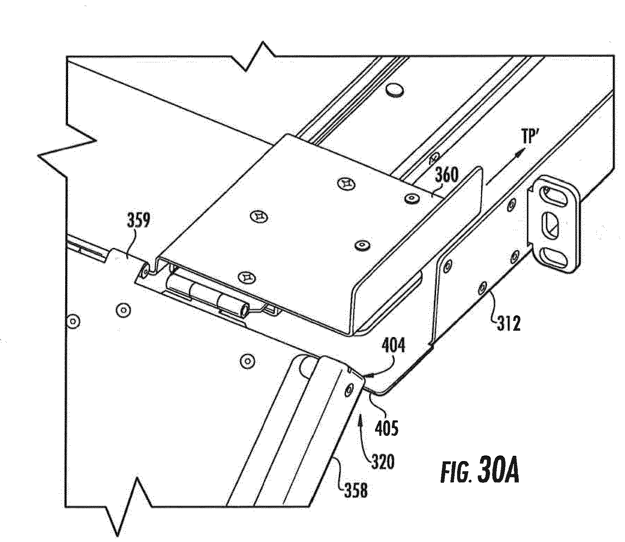

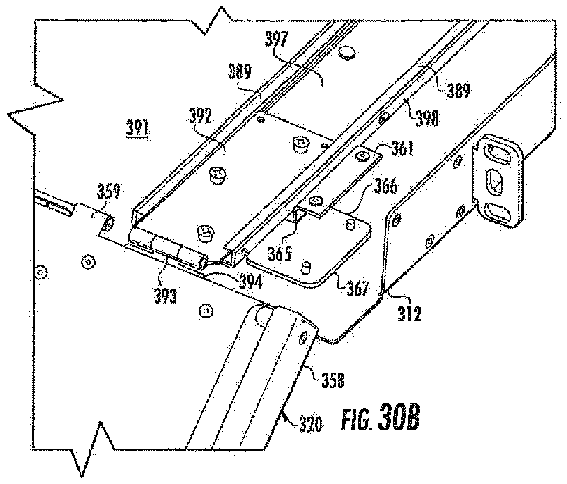

Another feature that may be provided in the fiber optic equipment drawer **320** is a drawer pull-out limiting member to limiting the pull out distance of the fiber optic equipment drawer **320**. **FIGS. 30A** **and** **30B** illustrate this feature. **FIG. 30A** is a close-up perspective view of the fiber optic equipment drawer **320** and the front panel **358** and rear panel **360** in particular. The rear panel **360** is configured to travel back into the chassis **312** along travel path **TP'** when the front panel **358** is brought planar to the rear panel **360** and pushed back along travel path **TP'** via linkage members **359** as will be described in more detail below. The front panel **358** is obscuring the view of a drawer pull-out limiting member **366**. **FIG. 30B** illustrates the perspective view of the fiber optic equipment drawer **320** of **FIG. 30A**, but with the rear panel **360** removed for illustration purposes. As illustrated in **FIG. 30B**, the drawer pull-out limiting member **366** is provided in the form of a plate member **367** attached to a base **391** of the chassis **312**. A tab member **361**, which is fixedly attached to the bottom side of the rear panel **360**, travels along the travel path **TP'** as the rear panel **360** moves along the travel path **TP'**. When the rear panel **360** is pulled out such that the tab member **361** enters a keyed section **365** of the plate member **367**, the tab member **361** will abut the plate member **367** and prevent the rear panel **360** from extending beyond the keyed section **365**, thus preventing the front panel **358** from further extending out from the chassis **312**.

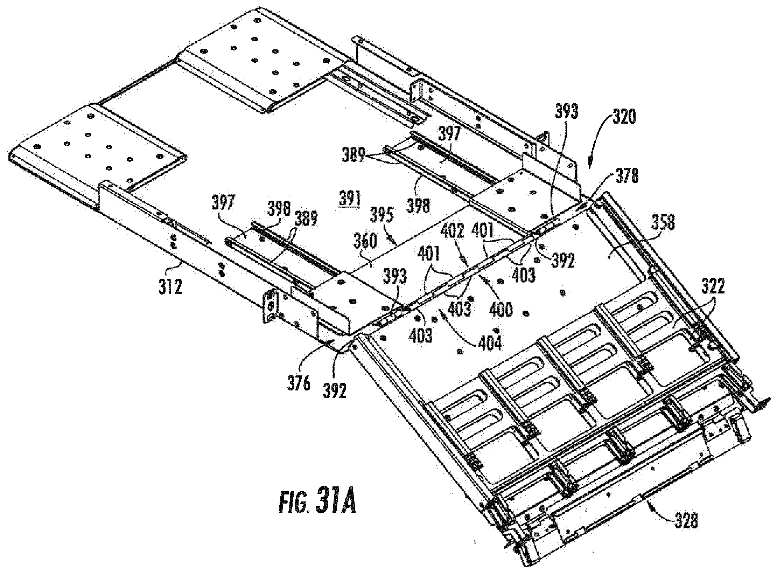

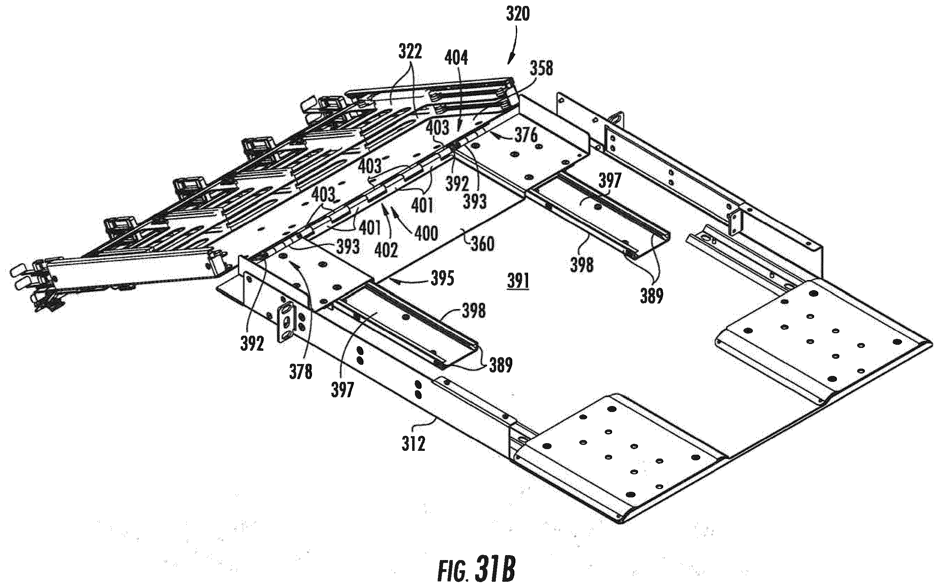

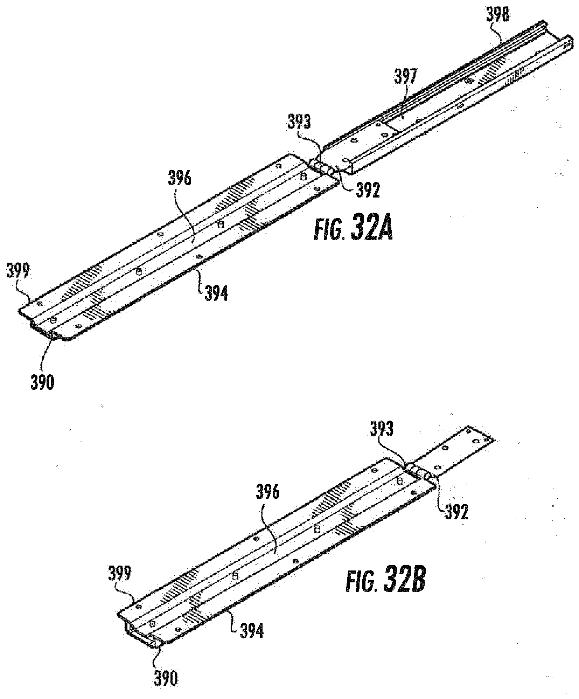

**FIGS. 30B** **and** **FIGS. 31A****-32B** illustrate the movement and tilt mechanism of fiber optic equipment drawer **320**. Thus, the tilt mechanism of the fiber optic equipment drawer **320** will be described in detail. As illustrated in **FIGS. 30B** **and** **31A-****32B**, the fiber optic equipment tray **320** is configured to move in and out of the chassis **312** to provide enhanced access to the fiber optic equipment trays **322** and any fiber optic modules (not shown) supported therein. **FIG. 31A** **and** **31B** illustrate front and rear perspective views of the fiber optic equipment drawer **320** extended out from the chassis **312** with the front panel **358** tilted. In this embodiment, the fiber optic equipment drawer **320** moves in and out of the chassis **312** about outer guide members **389** disposed in two drawer rail guides **398** disposed in the base **391** of the chassis **312** as illustrated in **FIGS. 31A** **and** **31B**. Two complimentary drawer rails **392** are fixedly connected to hinges **393** which are connected to linkage members **394**, as illustrated in **FIGS. 32A and 32B**. The linkage members **394** are fixedly attached to a bottom side **395** of the fiber optic equipment drawer **320.** Movement of the fiber optic equipment drawer **320** applies force to the linkage members **394** which in turn apply force on the drawer rails **392** causing them to move inside the drawer rail guides **398**, as illustrated in **FIG. 30B**. The linkage members **394** includes a lower inner section **396** that travels along an inner section **397** of the drawer rail guide **398**, as illustrated in **FIG. 32A**, when the fiber optic equipment drawer **320** is retracted.

The linkage members **394** also contain outer raised portions **399** so that the linkage members **394** do not interfere with the outer guide members **389** of the drawer rail guides **398** when the fiber optic equipment drawer **320** is retracted into the chassis **312**. The drawer rail guides **398** may be made of sheet metal or other material, such as plastic, or may be a hybrid between a metal and a plastic. For example, the outer guide members **389** may be made of plastic with the other portions of the drawer rail guides 398 made of sheet metal.

**FIGS. 31A-31B** also illustrate tilt and tilt limiting features of the fiber optic equipment drawer **320** according to one embodiment. As previously discussed, tilting the fiber optic equipment drawer **320** downward can provide enhanced access to the fiber optic modules disposed in the fiber optic equipment drawer **320** and/or their fiber optic connections. As illustrated in **FIG. 31A**, the front panel **358** can tilt downward about the rear panel **360**. The rear panel **360** remains oriented in a plane parallel or substantially parallel to the chassis **312**. Because the fiber optic equipment trays **322** are disposed in the front panel **358**, tilting of the front panel **358** also tilts the fiber optic equipment trays **322** for access.

The fiber optic equipment drawer **320** is configured to tilt downward via the hinges **393** and a hinge **400** disposed between the front panel **358** and the rear panel **360** of the fiber optic equipment drawer **320** in this embodiment. The hinge **400** is formed by rolled portions **401** on a front end **402** of the rear panel **360** interleaved with rolled portions **403** on a rear end **404** of the front panel **358**. When interleaved, the rolled portions **401**, **403** form the hinge **400** extending from a left side end 376 to a right side end **378** of the front and rear panels **358, 360**. When the fiber optic equipment drawer **320** is pulled out such that the front panel **358** is pulled out beyond the chassis **312**, the front panel **358** is free to tilt downward about the hinge **400**. The tilt angle of the fiber optic equipment drawer **320** is controlled by the interference between the rear end **404** of the front panel **358** with a front end **405** of the chassis **312**, as illustrated in **FIG. 30A**.

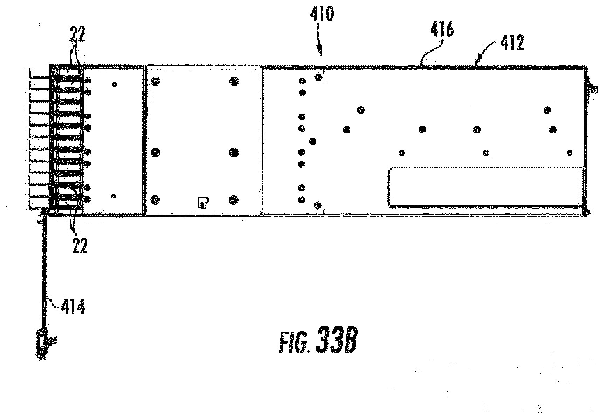

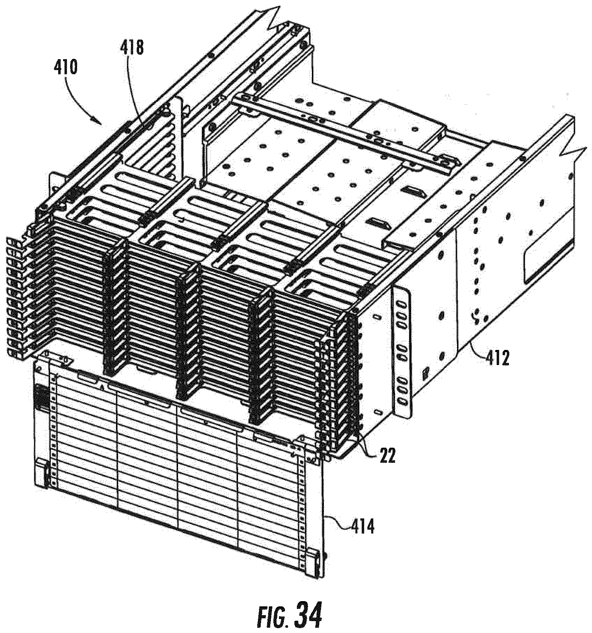

**FIGS. 33A-35** illustrate another embodiment of fiber optic equipment **410** that can include the same or essentially the same fiber optic equipment trays **22** previously described above and illustrated to support fiber optic modules **26**. The fiber optic equipment **410** in this embodiment includes a 4-U sized chassis **412** configured to hold fiber optic equipment trays **22** each supporting one or more fiber optic modules **26**. The fiber optic equipment trays **22** and fiber optic modules **26** supported by the chassis **412** are the same or essentially the same as those previously described above. Thus, the fiber optic equipment trays **22** disposed in the chassis **412** and fiber optic modules **26** disposed in the fiber optic equipment trays **22** do not need to be described again. **FIG. 34A** illustrates a front perspective view of the fiber optic equipment **410** with a front cover **414** lowered to show the fiber optic equipment trays **22** disposed inside the chassis **412.** A chassis cover **416** (**FIGS. 33A** **and** **33B**) is attached to the chassis **412** to secure the fiber optic equipment trays **22** and fiber optic modules contained therein (not illustrated). **FIG. 33B** illustrates a side view of the fiber optic equipment **410** illustrated in **FIG. 33A****.** **FIG. 34** illustrates the fiber optic equipment **410** as illustrated in **FIG. 33A**, but with the chassis cover **416** removed to show the fiber optic equipment trays **22** disposed inside the chassis **412**.

The fiber optic modules **26** can be supported in the fiber optic equipment trays **22** previously described and illustrated in **FIG. 15-18** as an example. The fiber optic equipment trays **22** can support one or more fiber optic modules like or similar to the fiber optic modules **26** previously described and illustrated in **FIGS. 16A** **and** **16B** as an example. The fiber optic equipment **410** in this embodiment does not include a fiber optic equipment drawer. The fiber optic equipment trays **22** in this embodiment are supported directly by the chassis **412** as opposed to an intermediate fiber optic equipment drawer. The tray guides **74, 74'** and tray rails **136** previously described in **FIGS. 19A-****21B** can be used in the chassis **412** to support the fiber optic equipment trays **22** therein and to allow each fiber optic equipment tray **22** to be independently extended out from and retracted back into the chassis **412.** However, in the chassis **412**, up to twelve (12) fiber optic equipment trays **22** can be provided for a total of up to five hundred seventy-six (576) fiber optic connections (i.e., twelve (12) fiber optic equipment trays **22** X four (4) fiber optic modules **26** per fiber optic equipment tray **22** X twelve (12) fiber optic connections per fiber optic module **26**). Thus, tray guides **418** disposed in the chassis **412**, as illustrated in **FIG. 34****,** can support up to twelve (12) fiber optic equipment trays **22**. Otherwise, the tray guides **418** contain the same guide members and other features to support the fiber optic equipment trays **22** disposed therein as the tray guides **74** illustrated in **FIGS**. **19A** **and** **19B** and previously discussed.

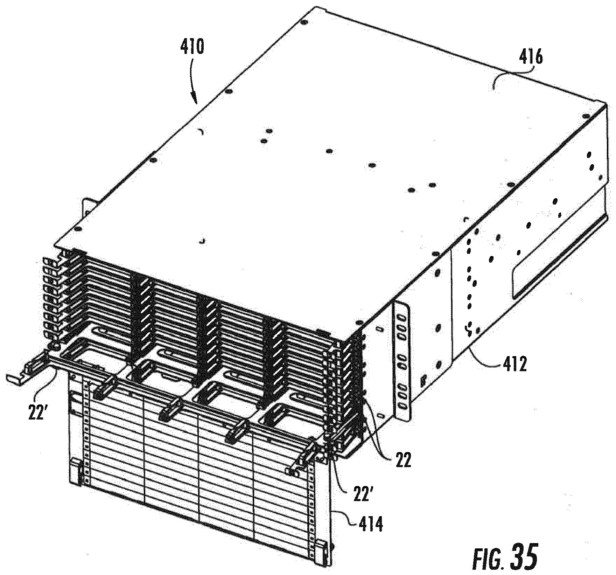

**FIG. 35** illustrates the fiber optic equipment **410** with one fiber optic equipment tray **22'** extended out from the chassis **412**. The fiber optic equipment tray **22'** contains tray rails **136** just as illustrated in **FIG. 21A** **and21B** and previously described above to move about tray guides **74**, just as illustrated in **FIGS. 19A** **and** **19B** and previously described above. The fiber optic equipment tray **22'** can be extended from the chassis **412** to provide enhanced access to fiber optic modules **26** contained therein and their fiber optic connections. When access is complete, the retracted fiber optic equipment tray **22'** can be pushed back into the chassis **412** about the tray guides **418** just as previously described and illustrated for the fiber optic equipment trays **22** with regard to the chassis **12** and fiber optic equipment drawer **20**.

Note that although the fiber optic equipment **410** illustrated in **FIGS. 33A-35** does not include a fiber optic equipment drawer to allow the fiber optic equipment trays **22** to be pulled in and out of the chassis **412** collectively, a fiber optic equipment drawer could be provided. The fiber optic equipment drawer could be provided like or similar to the fiber optic equipment drawer **20** previously described and illustrated. The fiber optic equipment drawer could be designed to be retained and move in and out of the chassis **412**, like the fiber optic equipment drawer **20** is retained and moved in and out of the chassis **12** previously described and illustrated. The fiber optic equipment tray **22** supported in the fiber optic equipment **410** would be inserted and supported in tray guides, like or similar to the tray guides **74** installed inside a fiber optic equipment drawer previously described and illustrated. Movement of the fiber optic equipment drawer would collectively move each of the fiber optic equipment trays **22**. Providing a fiber optic equipment drawer, including like or similar to the fiber optic equipment drawer **20** previously described and illustrated, is not limited to any particular size, arrangement, or number of fiber optic equipment trays or fiber optic modules.

Many modifications and other embodiments of the invention set forth herein will come to mind to one skilled in the art to which the invention pertains having the benefit of the teachings presented in the foregoing descriptions and the associated drawings. These modifications include, but are not limited to, number or type of fiber optic equipment, fiber optic equipment drawer, features included in the fiber optic equipment drawer, including but not limited to retention features, pull out distance features, tilt features, and/or tilt limiting features. Any size equipment, including but not limited to 1-U, 2-U and 4-U sizes may include some or all of the aforementioned features, including but not limited to fiber optic equipment drawer(s), both tiltable and non-tiltable, fiber optic equipment tray(s), and fiber optic modules disclosed herein and some or all of their features. Further, the modifications are not limited to the type of fiber optic equipment tray or the means or device to support fiber optic modules installed in the fiber optic equipment trays. The fiber optic modules can include any fiber optic connection type, including but not limited to fiber optic connectors and adapters, and number of fiber optic connections, density, etc.

The terms "fiber optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

Therefore, it is to be understood that the embodiments are not to be limited to the specific embodiments disclosed and that modifications and other embodiments are intended to be included within the scope of the appended claims. It is intended that the embodiments cover the modifications and variations of this invention provided they come within the scope of the appended claims. Although specific terms are employed herein, they are used in a generic and descriptive sense only and not for purposes of limitation.

## Claims

1. A fiber optic equipment assembly, comprising:
a fiber optic equipment chassis (12);
a plurality of fiber optic equipment trays (22) each containing tray rails (136) and module rail guides (126, 126') for supporting a plurality of independently movably-mounted fiber optic modules (26) being independently moveable within the module rail guides (126, 126'), wherein at least one intermediate module rail guide (126') is disposed in each of the fiber optic equipment trays (22) and the module rail guides (126) are disposed in a single row arrangement, each fiber optic module (26) having a front end (156), a rear end (160), and at least one fiber optic adapter (152) disposed on the front end (156) and a fiber optic adapter (158) disposed on the rear end (160),
a fiber optic equipment guide panel (180) having
an elongated member (181) attached to the chassis (12); and
a plurality of guide members (184) disposed in the elongated member (181), each guide member including guide channels (186) configured to receive and allow the tray rails (136) of a respective fiber optic equipment tray to move along the guide channels (186);
at least one stopping member (188, 190) disposed within each of the guide members (184), wherein the stopping members (188, 190) are configured to provide at least one stopping position for the tray rails (136).

2. The fiber optic equipment assembly of claim 1, wherein the at least one stopping member is comprised of at least one leaf spring (188) disposed in the at least one guide member (184).

3. The fiber optic equipment assembly of claim 2, wherein the at least one leaf spring (188) is provided in the form of at least one curly bracket.

4. The fiber optic equipment assembly of claim 2, wherein the at least one leaf spring (188) provides a force between 0,9 and 1,8 kg (2 and 4 pounds).

5. The fiber optic equipment assembly of claim 1, wherein the at least one stopping member (188, 190) is comprised of a plurality of stopping members (188, 190) disposed in the at least one guide member (184) configured to provide a plurality of stopping positions for the fiber optic equipment during movement along the at least one guide member (184).

6. The fiber optic equipment assembly of claim 1, wherein the chassis (12) is comprised of a drawer (20).

7. The fiber optic equipment assembly of claim 1, comprising two of the fiber optic equipment guide panels (180) disposed opposing each other in the chassis (12) each configured to receive opposing ends of the fiber optic equipment.

8. The fiber optic equipment assembly of any preceding claim, wherein the chassis (12) is a shelf for a fiber optic equipment rack, the shelf being 4.45cm in height, and wherein the chassis (12) supports three fiber optic equipment trays (20) with each tray stacked on top of each other.

9. The fiber optic equipment assembly of any preceding claim further comprising at least one fiber optic module installed therein, each fiber optic module (26) having a front end (156), a rear end (160), and at least one fiber optic adapter (152) disposed on the front end (156) and a fiber optic adapter (158) disposed on the rear end (160).

10. The fiber optic equipment assembly of claim 9 wherein each of the at least one fiber optic modules comprises module rails (128A, 128B) on each side (129A, 129B) of the module and is configured to be inserted into channels (130) disposed within the module rail guides (126).

11. The fiber optic equipment assembly of claim 10 wherein to install a fiber optic module (26) in one of the fiber optic equipment trays (22), the front end (156) of the fiber optic module (26) can be inserted from either the front end (132) or the rear end (134) of the fiber optic equipment tray (22).

12. The fiber optic equipment of any of claims 9 to 11 wherein the fiber optic module (26) is comprised of a plurality of fiber optic adapters (152) disposed on the front end (156) of the fiber optic module (26) and a single fiber optic adapter (158) disposed on the rear end (160) of the fiber optic module (26).

13. The fiber optic equipment of claim 12 wherein the plurality of fiber optic adapters (152) on the front end (156) of the fiber optic module (26) accept duplex LC fiber optic connectors.

14. The fiber optic equipment of claim 12 or 13 wherein the single fiber optic adapter (158) disposed on the rear end (160) of the fiber optic module (26) is a multi-fiber fiber optic adapter equipped to establish connections to multiple optical fibers.

## Patentansprüche

1. Faseroptikgeräteanordnung, die Folgendes umfasst:
ein Faseroptikgeräte-Chassis (12);
mehrere Faseroptikgeräteträger (22), die jeweils Trägerschienen (136) und Modulschienenführungen (126, 126') zum Tragen mehrerer unabhängig beweglich montierter Faseroptikmodule (26) enthalten, die innerhalb der Modulschienenführungen (126, 126') unabhängig beweglich sind, wobei mindestens eine Zwischenmodulschienenführung (126') in jedem der Faseroptikgeräteträger (22) angeordnet ist und die Modulschienenführungen (126) in einer einreihigen Anordnung angeordnet sind, wobei jedes Faseroptikmodul (26) ein vorderes Ende (156), ein hinteres Ende (160) und mindestens einen am vorderen Ende (156) angeordneten Faseroptikadapter (152) und einen am hinteren Ende (160) angeordneten Faseroptikadapter (158) aufweist,
eine Faseroptikgeräte-Führungsplatte (180) mit:
einem am Chassis (12) angebrachten länglichen Element (181); und
mehreren in dem länglichen Element (181) angeordneten Führungselementen (184), wobei jedes Führungselement Führungskanäle (186) enthält, die zum Aufnehmen der Trägerschienen (136) eines jeweiligen Faseroptikgeräteträgers und zum Zulassen von deren Bewegung entlang der Führungskanäle (186) konfiguriert sind;
mindestens ein Anschlagelement (188, 190), das in jedem der Führungselemente (184) angeordnet ist, wobei die Anschlagelemente (188, 190) zum Bereitstellen mindestens einer Anschlagposition für die Trägerschienen (136) konfiguriert sind.

2. Faseroptikgeräteanordnung nach Anspruch 1, wobei das mindestens eine Anschlagelement aus mindestens einer Blattfeder (188) besteht, die in dem mindestens einen Führungselement (184) angeordnet ist.

3. Faseroptikgeräteanordnung nach Anspruch 2, wobei die mindestens eine Blattfeder (188) in Form von mindestens einer gewellten Klammer vorgesehen ist.

4. Faseroptikgeräteanordnung nach Anspruch 2, wobei die mindestens eine Blattfeder (188) eine Kraft zwischen 0,9 und 1,8 kg (2 und 4 lbs) ergibt.

5. Faseroptikgeräteanordnung nach Anspruch 1, wobei das mindestens eine Anschlagelement (188, 190) aus mehreren Anschlagelementen (188, 190) besteht, die in dem mindestens einen Führungselement (184) angeordnet und zum Bereitstellen mehrerer Anschlagpositionen für das Faseroptikgerät während der Bewegung entlang des mindestens einen Führungselements (184) konfiguriert sind.

6. Faseroptikgeräteanordnung nach Anspruch 1, wobei das Chassis (12) aus einer Schublade (20) besteht.

7. Faseroptikgeräteanordnung nach Anspruch 1, die zwei der Faseroptikgeräte-Führungsplatten (180) umfasst, die einander gegenüberliegend in dem Chassis (12) angeordnet und jeweils zum Aufnehmen gegenüberliegender Enden des Faseroptikgeräts konfiguriert sind.

8. Faseroptikgeräteanordnung nach einem vorherigen Anspruch, wobei das Chassis (12) ein Fach für ein Faseroptikgeräterack ist, wobei das Fach eine Höhe von 4,45 cm hat, und wobei das Chassis (12) drei Faseroptikgeräteträger (20) trägt, wobei die Träger jeweils übereinander gestapelt ist.

9. Faseroptikgeräteanordnung nach einem vorherigen Anspruch, die ferner mindestens ein darin installiertes Faseroptikmodul umfasst, wobei jedes Faseroptikmodul (26) ein vorderes Ende (156), ein hinteres Ende (160) und mindestens einen am vorderen Ende (156) angeordneten Faseroptikadapter (152) und einen am hinteren Ende (160) angeordneten Faseroptikadapter (158) aufweist.

10. Faseroptikgeräteanordnung nach Anspruch 9, wobei jedes der mindestens einen Faseroptikmodule Modulschienen (128A, 128B) auf jeder Seite (129A, 129B) des Moduls umfasst und zum Einsetzen in innerhalb der Modulschienenführungen (126) angeordnete Kanäle (130) konfiguriert ist.

11. Faseroptikgeräteanordnung nach Anspruch 10, wobei zum Installieren eines Faseroptikmoduls (26) in einem der Faseroptikgeräteträger (22) das vordere Ende (156) des Faseroptikmoduls (26) entweder vom vorderen Ende (132) oder vom hinteren Ende (134) des Faseroptikgeräteträgers (22) aus eingesetzt werden kann.

12. Faseroptikgerät nach einem der Ansprüche 9 bis 11, wobei das Faseroptikmodul (26) aus mehreren am vorderen Ende (156) des Faseroptikmoduls (26) angeordneten Faseroptikadaptern (152) und einem einzelnen am hinteren Ende (160) des Faseroptikmoduls (26) angeordneten Faseroptikadapter (158) besteht.

13. Faseroptikgerät nach Anspruch 12, wobei die mehreren Faseroptikadapter (152) am vorderen Ende (156) des Faseroptikmoduls (26) Duplex-LC-Faseroptikverbinder aufnehmen.

14. Faseroptikgerät nach Anspruch 12 oder 13, wobei der am hinteren Ende (160) des Faseroptikmoduls (26) angeordnete einzelne Faseroptikadapter (158) ein Mehrfaser-Faseroptikadapter ist, der zum Herstellen von Verbindungen zu mehreren optischen Fasern ausgestattet ist.

## Revendications

1. Ensemble d'équipement à fibre optique, comprenant :
un châssis d'équipement à fibre optique (12) ;
une pluralité de plateaux d'équipement à fibre optique (22) contenant chacun des rails de plateau (136) et des guides de rails de module (126, 126') pour soutenir une pluralité de modules à fibre optique montés indépendamment de manière mobile (26) pouvant être déplacés indépendamment dans les guides de rails de module (126, 126'), dans lequel au moins un guide de rails de module intermédiaire (126') est disposé dans chacun des plateaux d'équipement à fibre optique (22) et les guides de rails de module (126) sont disposés en une seule rangée, chaque module à fibre optique (26) présentant une extrémité avant (156), une extrémité arrière (160) et au moins un adaptateur de fibre optique (152) disposé sur l'extrémité avant (156) et un adaptateur de fibre optique (158) disposé sur l'extrémité arrière (160),
un panneau de guidage d'équipement à fibre optique (180) présentant
un élément allongé (181) fixé au châssis (12) ; et
une pluralité d'éléments de guidage (184) disposés dans l'élément allongé (181), chaque élément de guidage comportant des coulisses de guidage (186) configurées pour recevoir des rails de plateau (136) d'un plateau d'équipement à fibre optique respectif et leur permettre de se déplacer le long des coulisses de guidage (186) ;
au moins un élément d'arrêt (188, 190) disposé à l'intérieur de chacun des éléments de guidage (184), dans lequel les éléments d'arrêt (188, 190) sont configurés pour fournir au moins une position d'arrêt des rails de plateau (136).

2. Ensemble d'équipement à fibre optique selon la revendication 1, dans lequel l'au moins un élément d'arrêt est composé d'au moins un ressort à lames (188) disposé dans l'au moins un élément de guidage (184).

3. Ensemble d'équipement à fibre optique selon la revendication 2, dans lequel l'au moins un ressort à lames (188) est fourni sous la forme d'au moins un support bouclé.

4. Ensemble d'équipement à fibre optique selon la revendication 2, dans lequel l'au moins un ressort à lames (188) produit une force comprise entre 0,9 et 1,8 kg (2 et 4 livres).

5. Ensemble d'équipement à fibre optique selon la revendication 1, dans lequel l'au moins un élément d'arrêt (188, 190) est constitué d'une pluralité d'éléments d'arrêt (188, 190) disposés dans l'au moins un élément de guidage (184 ) configuré pour fournir une pluralité de positions d'arrêt pour l'équipement à fibre optique durant un mouvement le long de l'au moins un élément de guidage (184).

6. Ensemble d'équipement à fibre optique selon la revendication 1, dans lequel le châssis (12) comprend un tiroir (20).

7. Ensemble d'équipement à fibre optique selon la revendication 1, comprenant deux des panneaux de guidage d'équipement à fibre optique (180) disposés en regard l'un de l'autre dans le châssis (12), configurés chacun pour recevoir des extrémités opposées de l'équipement à fibre optique.

8. Ensemble d'équipement à fibre optique selon l'une quelconque des revendications précédentes, dans lequel le châssis (12) est une étagère d'une baie d'équipement à fibre optique, l'étagère mesurant 4,45 cm de hauteur, et dans lequel le châssis (12) soutient trois plateaux d'équipement à fibre optique (20) chaque plateau étant empilé sur les autres.

9. Ensemble d'équipement à fibre optique selon l'une quelconque des revendications précédentes dans lequel en outre est installé au moins un module à fibre optique, chaque module à fibre optique (26) présentant une extrémité avant (156), une extrémité arrière (160) et au moins un adaptateur de fibre optique (152) disposé sur l'extrémité avant (156) et un adaptateur de fibre optique (158) disposé sur l'extrémité arrière (160).

10. Ensemble d'équipement à fibre optique selon la revendication 9 dans lequel chacun de l'au moins un module à fibre optique comprend des rails de module (128A, 128B) de chaque côté (129A, 129B) du module et est configuré pour être inséré dans des coulisses (130) disposées dans les guides de rails de module (126).

11. Ensemble d'équipement à fibre optique selon la revendication 10 dans lequel pour installer un module à fibre optique (26) dans l'un des plateaux d'équipement à fibre optique (22), l'extrémité avant (156) du module à fibre optique (26) peut être insérée à partir de l'extrémité avant (132) ou de l'extrémité arrière (134) du plateau d'équipement à fibre optique (22).

12. Equipement à fibre optique selon l'une quelconque des revendications 9 à 11 dans lequel le module à fibre optique (26) est composé d'une pluralité d'adaptateurs de fibre optique (152) disposés sur l'extrémité avant (156) du module à fibre optique (26) et d'un adaptateur de fibre optique unique (158) disposé sur l'extrémité arrière (160) du module à fibre optique (26 ).

13. Equipement à fibre optique selon la revendication 12 dans lequel la pluralité d'adaptateurs de fibre optique (152) sur l'extrémité avant (156) du module à fibre optique (26) accepte des connecteurs de fibre optique LC duplex .

14. Equipement à fibre optique selon la revendication 12 ou 13 dans lequel l'adaptateur de fibre optique simple (158) disposé sur l'extrémité arrière (160) du module à fibre optique (26) est un adaptateur de fibre optique multifibre équipé pour établir des connexions avec de multiples fibres optiques.
